# EUROPEAN PATENT APPLICATION

(11) **EP 4 503 543 A1**
(43) Date of publication of application: **05.02.2025**
(21) Application number: 23777996.2
(22) Date of filing: 23.03.2023
(51) Int. Cl.: H04L 41/18, H04W 4/20

(54) **INFORMATION ACQUISITION METHOD AND APPARATUS, AND NETWORK DEVICE AND TERMINAL**

(30) Priority: 28.03.2022 CN 202210313381
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100032 (CN)
(74) Representative: Murgitroyd & Company
(86) International application number: PCT/CN2023/083388
(87) International publication number: WO 2023/185627

(57) **Abstract**

An object of the present disclosure is to provide an information obtaining method and device, a node device and a UE. The method includes: receiving a first request message sent by a user equipment (UE), where the first request message is used to request for obtaining an allowed analytics identifier; obtaining a subscribed analytics identifier of the UE and/or an analytics identifier supported by a network side, according to the first request message; determining the allowed analytics identifier of the UE according to the subscribed analytics identifier of the UE and/or the analytics identifier supported by the network side; and sending the allowed analytics identifier to the UE.

## Description

### CROSS-REFERENCE TO RELATED APPLICATION

The present application is filed based on and claims the priority of Chinese Application No. 202210313381.3 filed on March 28, 2022, the disclosure of which are incorporated in their entireties by reference herein.

### TECHNICAL FIELD

The present disclosure relates to the field of wireless technologies, and in particular to an information obtaining method, device, network device and user equipment.

### BACKGROUND

In scenarios defined by the 3rd Generation Partnership Project (3GPP) in related art, it is supported that network data analytics function (NWDAF) opens quality of service (QoS) sustainability analytics results to V2X application function (AF) to assist the V2X AF in making decisions on application layer parameters of user equipment (UE) (also known as a terminal), and sends the application layer parameters to the UE. Currently, it is only supported that NWDAF collects data from UE through AF, but it is not supported that UE subscribes to and obtains analytics results, 5G Core (5GC) network information and SGC information from NWDAF, and thus it is impossible to guarantee that the UE can timely and effectively make decisions based on the analytics results, SGC network information or SGC information.

### SUMMARY

An object of the present disclosure is to provide an information obtaining method, device, network device and user equipment, which are used to solve the problem in the related art that the UE cannot obtain analytics results, SGC network information, and SGC information from the network function.

One embodiment of the present disclosure provides an information obtaining method, which is performed by a first network function, and the method includes:
receiving a first request message sent by a user equipment (UE), wherein the first request message is used to request for obtaining an allowed analytics identifier;
obtaining a subscribed analytics identifier of the UE and/or an analytics identifier supported by a network side, according to the first request message;
determining the allowed analytics identifier of the UE according to the subscribed analytics identifier of the UE and/or the analytics identifier supported by the network side; and
sending the allowed analytics identifier to the UE.

One embodiment of the present disclosure provides an information obtaining method, performed by a user equipment (UE), including:
sending a first request message to a first network function, wherein the first request message is used to request for obtaining an allowed analytics identifier;
receiving the allowed analytics identifier sent by the first network function.

One embodiment of the present disclosure provides an information obtaining method, performed by a first network function, including:
receiving a first request message sent by a user equipment (UE), wherein the first request message is used to request for subscribing to an analytics result;
according to the first request message, sending a subscription request for subscribing to the analytics result, to a second network function.

One embodiment of the present disclosure provides an information obtaining method, performed by a second network function, including:
receiving a subscription request sent by a first network function, wherein the subscription request is used to request for subscribing to an analytics result;
according to the subscription request, sending the subscribed analytics result to a fourth network function.

One embodiment of the present disclosure provides an information obtaining method, performed by a user equipment (UE), including:
sending a first request message to a first network function, wherein the first request message is used to request for subscribing to an analytics result;
receiving the subscribed analytics result sent by the fourth network function.

One embodiment of the present disclosure provides an information obtaining method, performed by a first network function which is an application layer function (AF), including:
sending a subscription request to a second network function, wherein the subscription request is used to request for subscribing to an analytics result.

One embodiment of the present disclosure provides an information obtaining method, performed by a second network function, including:
receiving a subscription request sent by a first network function; wherein the subscription request is used to request for subscribing to an analytics result, and the first network function is an application layer function (AF);
according to the subscription request, sending the subscribed analytics result to a fourth network function.

One embodiment of the present disclosure provides an information obtaining method, performed by a user equipment (UE), including:
receiving an analytics result sent by a fourth network function.

One embodiment of the present disclosure provides an information obtaining method, performed by a fourth network function, including:
receiving an analytics result sent by a second network function;
sending the analytics result to a user equipment (UE).

One embodiment of the present disclosure provides an information obtaining method, performed by a first network function which is an application layer function (AF), including:
sending a subscription request for SGC network information or SGC information to a second network function; wherein the second network function is a SGC network function (NF).

One embodiment of the present disclosure provides an information obtaining method, performed by a second network function which is a SGC network function (NF), including:
receiving a subscription request sent by a first network function, wherein the subscription request is used to subscribe to SGC network information or SGC information;
sending the subscribed SGC network information or SGC information to a fourth network function according to the subscription request.

One embodiment of the present disclosure provides an information obtaining method, performed by a user equipment (UE), including:
sending a first request message to a first network function; wherein the first request message is used to request for subscribing to SGC network information or SGC information, and the first network function is an application layer function (AF);
obtaining the SGC network information or SGC information subscribed by the UE, sent by the fourth network function.

One embodiment of the present disclosure provides an information obtaining method, performed by a fourth network function, including:
receiving SGC network information or SGC information sent by a second network function; wherein the second network function is SGC network function (NF);
sending the SGC network information or SGC information to a user equipment (UE).

One embodiment of the present disclosure provides an information obtaining method, performed by a first network function which is an application layer function (AF) or a network data analytics function (NWDAF), including:
obtaining first information; wherein the first information includes at least one of UE location, UE status, subscription information, user plane information, wireless status and service quality monitoring information;
selecting a federated learning member according to the first information.

One embodiment of the present disclosure provides a network device which is a first network function, including: a transceiver and a processor;
wherein the transceiver is configured to receive a first request message sent by a user equipment (UE), wherein the first request message is used to request for obtaining an allowed analytics identifier;
the processor is configured to obtain a subscribed analytics identifier of the UE and/or an analytics identifier supported by a network side according to the first request message;
the processor is further configured to determine the allowed analytics identifier of the UE according to the subscribed analytics identifier of the UE and/or the analytics identifier supported by the network side; and
the transceiver is further configured to send the allowed analytics identifier to the UE.

One embodiment of the present disclosure provides a user equipment (UE), including: a transceiver; wherein the transceiver is configured to,
send a first request message to a first network function, wherein the first request message is used to request for obtaining an allowed analytics identifier;
receive the allowed analytics identifier sent by the first network function.

One embodiment of the present disclosure provides a network device which is a first network function, including: a transceiver; wherein the transceiver is configured to,
receive a first request message sent by a user equipment (UE), wherein the first request message is used to request for subscribing to an analytics result;
according to the first request message, send a subscription request for subscribing to the analytics result, to a second network function.

One embodiment of the present disclosure provides a network device which is a second network function, including: a transceiver; wherein the transceiver is configured to,
receive a subscription request sent by a first network function, wherein the subscription request is used to request for subscribing to an analytics result;
according to the subscription request, send the subscribed analytics result to a fourth network function.

One embodiment of the present disclosure provides a user equipment (UE), including: a transceiver; wherein the transceiver is configured to,
send a first request message to a first network function, wherein the first request message is used to request for subscribing to an analytics result;
receive the subscribed analytics result sent by the fourth network function.

One embodiment of the present disclosure provides a network device which is a first network function that is an application layer function (AF), including: a transceiver; wherein the transceiver is configured to,
send a subscription request to a second network function, wherein the subscription request is used to request for subscribing to an analytics result.

One embodiment of the present disclosure provides a network device which is a second network function, including: a transceiver; wherein the transceiver is configured to,
receiving a subscription request sent by a first network function; wherein the subscription request is used to request for subscribing to an analytics result, and the first network function is an application layer function (AF);
according to the subscription request, sending the subscribed analytics result to a fourth network function.

One embodiment of the present disclosure provides a user equipment (UE), including: a transceiver; wherein the transceiver is configured to,
receive an analytics result sent by a fourth network function.

One embodiment of the present disclosure provides a network device which is a fourth network function, including: a transceiver; wherein the transceiver is configured to,
receive an analytics result sent by a second network function;
send the analytics result to a user equipment (UE).

One embodiment of the present disclosure provides a network device which is a first network function that is an application layer function (AF), including: a transceiver; wherein the transceiver is configured to,
send a subscription request for SGC network information or SGC information to a second network function; wherein the second network function is a SGC network function (NF).

One embodiment of the present disclosure provides a network device which is a second network function that is a SGC network function (NF), including: a transceiver; wherein the transceiver is configured to,
receive a subscription request sent by a first network function, wherein the subscription request is used to subscribe to SGC network information or SGC information;
send the subscribed SGC network information or SGC information to a fourth network function according to the subscription request.

One embodiment of the present disclosure provides a user equipment (UE), including: a transceiver; wherein the transceiver is configured to,
send a first request message to a first network function; wherein the first request message is used to request for subscribing to SGC network information or SGC information, and the first network function is an application layer function (AF);
obtain the SGC network information or SGC information subscribed by the UE, sent by the fourth network function.

One embodiment of the present disclosure provides a network device which is a fourth network function, including: a transceiver; wherein the transceiver is configured to,
receive 5GC network information or SGC information sent by a second network function; wherein the second network function is SGC network function (NF);
send the SGC network information or SGC information to a user equipment (UE).

One embodiment of the present disclosure provides a network device which is a first network function that is an application layer function (AF) or a network data analytics function (NWDAF), including: a transceiver; wherein the transceiver is configured to,
obtain first information; wherein the first information includes at least one of UE location, UE status, subscription information, user plane information, wireless status and service quality monitoring information;
select a federated learning member according to the first information.

One embodiment of the present disclosure provides a node device, including: a transceiver, a processor, a memory, and a program or instruction stored on the memory and executable on the processor; wherein the processor executes the program or instruction to perform any one of the above information obtaining method.

One embodiment of the present disclosure provides a readable storage medium, including a program or instructions stored thereon; wherein the program or instructions, when executed by a processor, causes the processor to perform any one of the above information obtaining method.

By adopting the information obtaining method in the embodiment of the present disclosure, the UE can send a request to the network function to request for an allowed analytics identifier, or subscribing to an analytics result, SGC network information or SGC information, etc. The network function provides an analytics identifier, analytics result, SGC network information and/or SGC information to the UE, thereby solving the problem in the related art that the above information cannot be obtained from the network function.

### BRIEF DESCRIPTION OF THE DRAWINGS

FIG. 1 is a schematic flowchart of a first implementation of an information obtaining method according to a first embodiment of the present disclosure;
FIG. 2 is a schematic flowchart of one implementation of the information obtaining method according to an embodiment of the present disclosure;
FIG. 3 is a schematic flowchart of a second implementation of an information obtaining method according to the first embodiment of the present disclosure;
FIG. 4 is a schematic flowchart of a first implementation of an information obtaining method according to a second embodiment of the present disclosure;
FIG. 5 is a schematic flowchart of a second implementation of an information obtaining method according to the second embodiment of the present disclosure;
FIG. 6 is a schematic flowchart of a second implementation of an information obtaining method according to the second embodiment of the present disclosure;
FIG. 7 is a schematic flowchart of a first implementation of an information obtaining method according to a third embodiment of the present disclosure;
FIG. 8 is a schematic flowchart of a second implementation of an information obtaining method according to the third embodiment of the present disclosure;
FIG. 9 is a schematic flowchart of a third implementation of an information obtaining method according to the third embodiment of the present disclosure;
FIG. 10 is a schematic flowchart of a fourth implementation of an information obtaining method according to the third embodiment of the present disclosure;
FIG. 11 is a schematic flowchart of a first implementation of an information obtaining method according to a fourth embodiment of the present disclosure;
FIG. 12 is a schematic flowchart of a second implementation of an information obtaining method according to the fourth embodiment of the present disclosure;
FIG. 13 is a schematic flowchart of a third implementation of an information obtaining method according to the fourth embodiment of the present disclosure;
FIG. 14 is a schematic flowchart of a fourth implementation of an information obtaining method according to the fourth embodiment of the present disclosure;
FIG. 15 is a schematic flowchart of a fifth implementation of an information obtaining method according to the fourth embodiment of the present disclosure;
FIG. 16 is a schematic flowchart of an information obtaining method according to a sixth embodiment of the present disclosure;
FIG. 17 is a first schematic diagram of an information obtaining device according to the fourth embodiment of the present disclosure;
FIG. 18 is a second schematic diagram of an information obtaining device according to the fourth embodiment of the present disclosure;
FIG. 19 is a third schematic diagram of an information obtaining device according to the fourth embodiment of the present disclosure;
FIG. 20 is a fourth schematic diagram of an information obtaining device according to the fourth embodiment of the present disclosure;
FIG. 21 is a fifth schematic diagram of an information obtaining device according to the fourth embodiment of the present disclosure;
FIG. 22 is a sixth schematic diagram of an information obtaining device according to the fourth embodiment of the present disclosure;
FIG. 23 is a seventh schematic diagram of an information obtaining device according to the fourth embodiment of the present disclosure;
FIG. 24 is an eighth schematic diagram of an information obtaining device according to the fourth embodiment of the present disclosure;
FIG. 25 is a ninth schematic diagram of an information obtaining device according to the fourth embodiment of the present disclosure;
FIG. 26 is a tenth schematic diagram of an information obtaining device according to the fourth embodiment of the present disclosure;
FIG. 27 is an eleventh schematic diagram of an information obtaining device according to the fourth embodiment of the present disclosure;
FIG. 28 is a twelfth schematic diagram of an information obtaining device according to the fourth embodiment of the present disclosure;
FIG. 29 is a thirteenth schematic diagram of an information obtaining device according to the fourth embodiment of the present disclosure; and
FIG. 30 is a fourteenth schematic diagram of an information obtaining device according to the fourth embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

In addition, the terms "system" and "network" are often used interchangeably herein.

In order to solve the problem in the related art that the UE cannot obtain analytics results from the network function, one embodiment of the present disclosure provide an information obtaining method, in which a UE can send a request to the network function for requesting to obtain an allowed analytics identifier and/or for requesting subscribing to analytics results, etc., and the network function provides analytics identifier and/or analytics results to the UE, thereby solving the problem of unable to obtain analytics results from the network function in the related art. Specific implementations of the information obtaining method according to embodiments of the present disclosure are described hereinafter.

### First embodiment

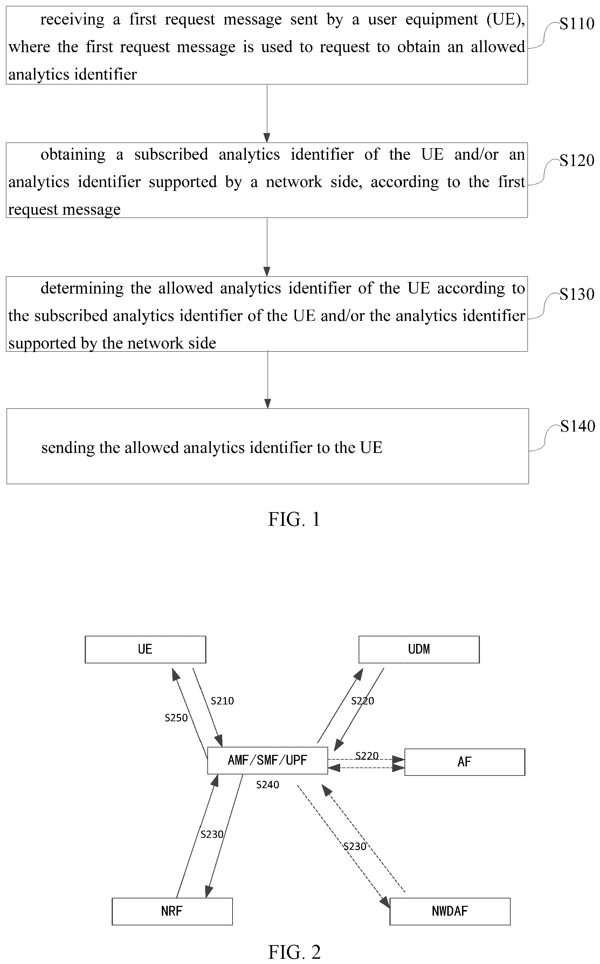

In the first embodiment of the present disclosure, an information obtaining method performed by a first network function, is provided. As shown in FIG. 1, the method includes the following steps.

S110: receiving a first request message sent by a user equipment (UE), where the first request message is used to request to obtain an allowed analytics identifier.

S120: obtaining a subscribed analytics identifier of the UE and/or an analytics identifier supported by a network side, according to the first request message.

S130: determining the allowed analytics identifier of the UE according to the subscribed analytics identifier of the UE and/or the analytics identifier supported by the network side.

S140: sending the allowed analytics identifier to the UE.

With the information obtaining method according to one embodiment of the present disclosure, in one implementation, the UE sends a first request message for requesting to obtain an allowed analytics identifier to the first network function; and the first network function can obtain a subscribed analytics identifier of the UE and/or an analytics identifier supported by a network side according to the first request message, and then determines the allowed analytics identifier of the UE and returns the allowed analytics identifier to the UE, so that the UE can obtain the allowed analytics identifier from the network function.

In the first embodiment, the first network function is one of an access and mobility management function (AMF) and a session management function (SMF).

The step S120 of obtaining a subscribed analytics identifier of the UE according to the first request message, includes:
according to the first request message, sending a second request message to a second network function, and obtaining the subscribed analytics identifier of the UE sent by the second network function according to the second request message.

Optionally, the second network function is one of an application layer function (AF) and a unified data management (UDM).

Optionally, the step S120 of obtaining an analytics identifier supported by a network side according to the first request message, includes:
according to the first request message, obtaining the analytics identifier supported by the network side by using local configuration; or, obtaining the analytics identifier supported by the network side by sending a query request to a third network function.

Optionally, the first request message includes the analytics identifier and/or area of interest (AOI) requested by the UE. The third network function is a network repository function (NRF).

It should be noted that the first request message including the analytics identifier and/or the AOI requested by the UE, may be interpreted as that the first request message carries or indicates the analytics identifier and/or the AOI requested by the UE

With the information obtaining method according to the first embodiment, the first network function determines the allowed analytics identifier for the UE based on the analytics identifier supported by the network side and/or the subscribed analytics identifier. Optionally, the first network function determines an analytics identifier which is supported by the network side and is subscribed by the UE, as an allowed analytics identifier.

In the embodiment of the present disclosure, optionally, in the step S110, when the first request message received by the first network function includes the analytics identifier requested by the UE, the determining the allowed analytics identifier of the UE according to the subscribed analytics identifier of the UE and/or the analytics identifier supported by the network side, includes:
determining the allowed analytics identifier according to the analytics identifier supported by the network side and the subscribed analytics identifier as well as the analytics identifier requested by the UE.

In the first embodiment, according to the analytics identifier supported by the network side and the subscribed analytics identifier as well as the analytics identifier requested by the UE, the first network function determines an analytics identifier which is simultaneously supported by the network side, subscribed by the UE and requested by the UE, as an allowed analytics identifier.

Optionally, in one embodiment, the first network function determines the analytics identifier supported by the network side according to the local configuration; or sends a query request to NRF to obtain the analytics identifier supported by the network side. Specifically, the first network function obtains the supported analytics identifier according to the local configuration or by sending a query request to the NRF; optionally, the query request sent by the first network function to the NRF further includes the analytics identifier requested by the UE and /or the requested AOI. According to the query request, the NRF also provides NWDAF or AF information for providing analytics results to the first network function.

In the first embodiment, by using the above implementation process, the first network function obtains the allowed analytics identifier and sends the determined allowed analytics identifier to the UE.

According to the information obtaining method of the first embodiment of the present disclosure, as shown in FIG. 2, a specific process for the UE to obtain the allowed analytics identifier from the network may include the following steps.

S210: sending, by the UE, a first request message to a first network function (AMF and/or SMF), where the first request message includes an analytics ID and/or an area of interest (AOI) requested by the UE.

S220: sending, by the first network function (AMF and/or SMF), a second request message to a second network function (UDM and/or AF). Optionally, the second request message includes a subscription permanent identifier (SUPI) of UE; according to the second request message, the second network function (UDM and/or AF) feeds back a subscribed analytics ID.

S230: obtaining, by the first network function (AMF and/or SMF), NWDAF information or AF information, according to local configuration or by sending a query request to NRF, and obtaining NWDAF supported analytics ID.

S240: determining, by the first network function (AMF and/or SMF), allowed analytics identifier, based on the analytics identifier supported by the network side and the subscribed analytics ID in combination with the analytics identifier requested by the UE.

S250: sending, by the first network function (AMF and/or SMF), a message carrying the allowed analytics ID to the UE.

With the first embodiment, the UE can send a request message to the AMF or SMF to request an allowed analytics ID. In addition, the UE can also obtain the allowed analytics ID from the AMF or SMF, thereby obtaining the allowed analytics ID from the network side and then obtaining an analytics result from the network side.

In addition, for AMF or SMF, it has the function of receiving a request message sent by the UE to request to obtain an analytics ID, obtaining a subscribed analytics identifier from UDM or AF according to the received request message, obtaining NWDAF or AF and supported analytics identifier according to the local configuration or by sending a query request, determining an allowed analytics identifier, and sending the allowed analytics identifier to the UE.

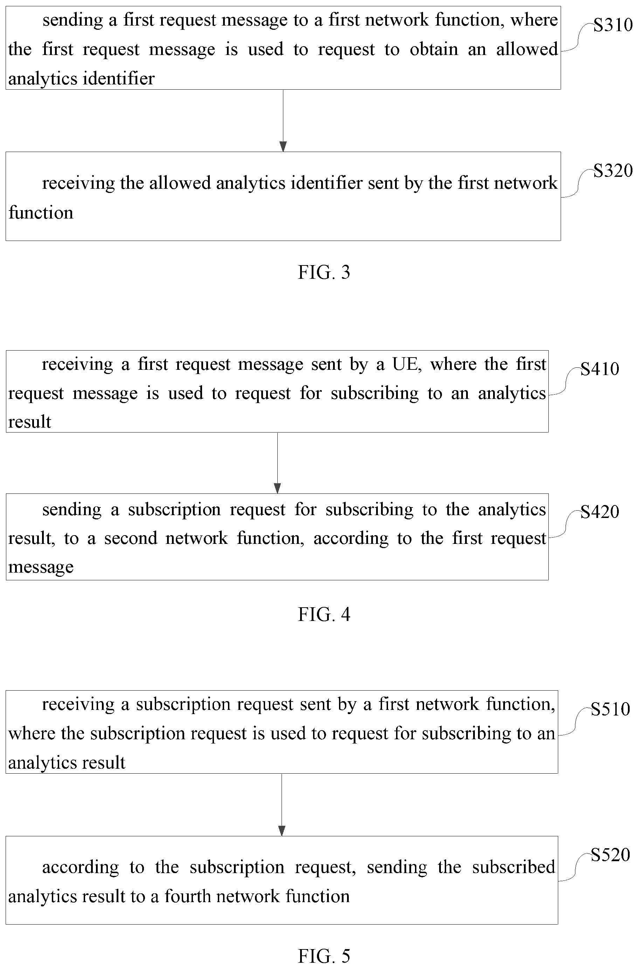

One implementation of the first embodiment of the present disclosure further provides an information obtaining method performed by a user equipment (UE). As shown in FIG. 3, the method includes:
S310: sending a first request message to a first network function, where the first request message is used to request to obtain an allowed analytics identifier;
S320: receiving the allowed analytics identifier sent by the first network function.

According to the information obtaining method in the first embodiment, in one implementation, when applied to the first network function, the UE can send a request message to the first network function for requesting to obtain the analytics identifier; and the first network function can obtain a subscribed analytics identifier from UDM or AF according to the received request message, obtain NWDAF or AF and supported analytics identifier according to the local configuration or by sending a query request, determine an allowed analytics identifier, and send the allowed analytics identifier to the UE, so that the UE can obtain the allowed analytics ID from the network side and then obtain an analytics result from the network side.

Optionally, in the information obtaining method, the first request message includes the analytics identifier and/or AOI requested by the UE.

Optionally, in the information obtaining method, the first network function is one of the access and mobility management function (AMF) and the session management function (SMF).

The specific implementation process of the information obtaining method of the first embodiment of the present disclosure when applied to the UE can refer to the above description in combination with FIG. 2 and FIG. 3, which will not be described in detail here.

### Second embodiment

The second embodiment of the present disclosure provides an information obtaining method, performed by a first network function. As shown in FIG. 4, the method includes:
S410: receiving a first request message sent by a UE, where the first request message is used to request for subscribing to an analytics result;
S420: sending a subscription request for subscribing to the analytics result, to a second network function, according to the first request message.

With the information obtaining method in the second embodiment, the first network function can send a subscription request to the second network function according to the first request message of the UE, thereby subscribing the analytics result to the UE, so that the UE can obtain the analytics result from the network side.

In this second embodiment, optionally, the first network function is one of an access and mobility management function (AMF), a session management function (SMF) and a user plane function (UPF). The second network function is one of a network data analytics function (NWDAF) and an application layer function (AF).

With the second embodiment, the UE can subscribe to the NWDAF or AF for analytics results through one of AMF, SMF, and UPF, thereby obtaining the analytics results from the network side.

Optionally, in the step S410 of the first network function receiving a first request message sent by a UE, optionally, the first request message includes (carries or indicates) the analytics identifier and/or AOI requested by the UE. Optionally, the AOI is AOI of the requested analytics result.

Specifically, the first request message is used to request to subscribe to the second network function for analytics results. In the embodiment of the present disclosure, when the first network function is UPF, UPF needs to parse the first request message sent by the UE and identify the first request message as a request message for subscribing analytics results to NWDAF or AF.

Optionally, in the step S410, after receiving the first request message, the method further includes:
obtaining the second network function that supports providing the analytics result for the UE according to local configuration; or obtaining the second network function by sending a query request to a third network function.

The third network function is a network repository function (NRF).

With this implementation, after receiving the first request message and before sending a subscription request to the second network function, the first network function determines the NWDAF and/or AF that can provide analytics results according to the local configuration; or, sends a query request to the NRF For querying NWDAF and/or AF that can provide analytics results.

Optionally, the query request and the subscription request respectively includes (carries or indicates) the analytics identifier and/or AOI requested by the UE. In this implementation manner, after receiving the subscription request, the second network function sends the analytics result subscribed by the UE to a fourth network function.

Optionally, the fourth network function is one of AMF, a session management function (SMF) and a user plane function (UPF).

In one implementation of the embodiment of the present disclosure, optionally, according to the information obtaining method, after the first network function receives the first request message sent by the UE and sends the subscription request to the second network function, the method further includes:
obtaining the analytics result sent by the second network function according to the subscription request;
sending the analytics result to the UE.

With this implementation, in one implementation, the UE sends a first request message to the first network function; after the first network function sends a subscription request to the second network function, the second network function can return the analytics result subscribed by the UE to the UE again. That is, the fourth network function is the same as the first network function.

In another embodiment, optionally, the UE sends a first request message to the first network function; after the first network function sends a subscription request to the second network function, the second network function can return the analytics result to the UE through the fourth network function again. That is, the fourth network function is different from the first network function.

In one embodiment, optionally, for analytics results of simple models and/or low query frequency, the second network function sends the analytics result to the UE through AMF and/or SMF; for analytics results of complex models and/or high query frequency, the second network function sends the analytics results to the UE through UPF, and when the first network function sends a subscription request to NWDAF or AF, the subscription request further includes address information of the UE, so that the analytics result can be sent to the UE through the corresponding UPF.

With this second embodiment, the UE is capable of sending a request message for requesting subscription analytics results to AMF, SMF and/or UPF, and is able to obtain the subscribed analytics results from NWDAF or AF through AMF, SMF and/or UPF, thereby solving the problem in the related art that analytics results cannot be obtained from the network side.

In addition, for AMF, SMF and UPF, it has the function of receiving a request message for requesting subscription to the analytics results sent by the UE, and sending a subscription request to NWDAF or AF according to the request message to subscribe to the analytics results; for NWDAF and AF, it has the function of sending the analytics results to at least one of AMF, SMF and UPF.

In the second embodiment of the present disclosure, one implementation further provides an information obtaining method, performed by a second network function. As shown in FIG. 5, the method includes:
S510: receiving a subscription request sent by a first network function, where the subscription request is used to request for subscribing to an analytics result;
S520: according to the subscription request, sending the subscribed analytics result to a fourth network function.

In one implementation of the second embodiment, with the information obtaining method, the first network function can send a subscription request to the second network function according to the first request message of the UE, and the second network function can provide the analytics result to the UE through the fourth network function, so that the UE obtains the analytics result from the network side.

Optionally, the first network function is one of an access and mobility management function (AMF), a session management function (SMF) and a user plane function (UPF); the second network function is one of the NWDAF and the application layer function (AF); the fourth network function is one of the AMF, SMF and UPF.

Optionally, the subscription request includes an analytics identifier and/or AOI of the requested analytics result.

Optionally, the subscription request further includes address information of the UE.

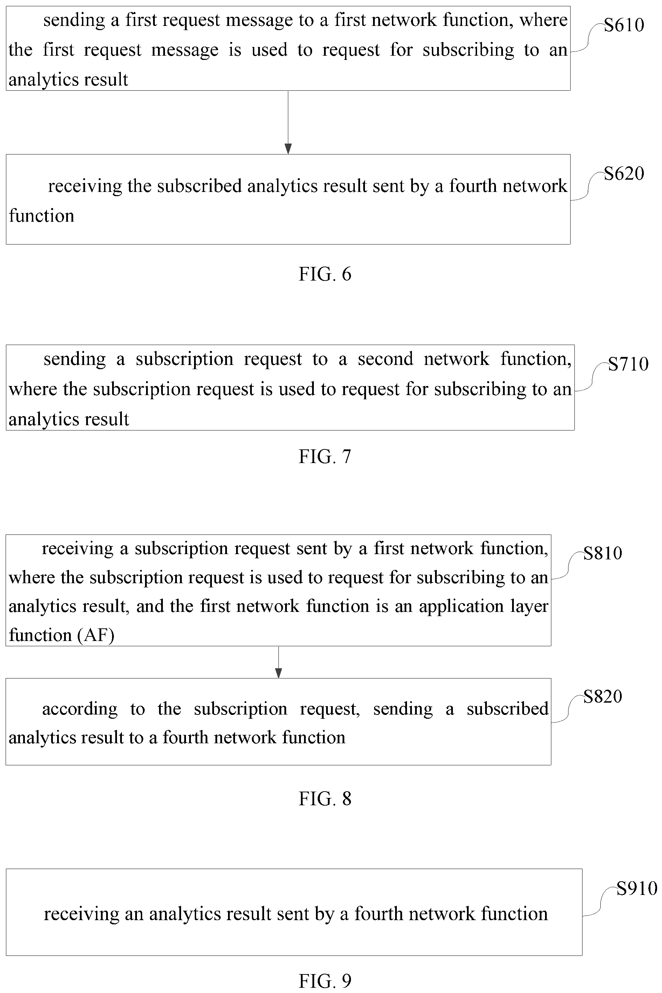

In the second embodiment of the present disclosure, one implementation further provides an information obtaining method, performed by a user equipment (UE). As shown in FIG. 6, the method includes:
S610: sending a first request message to a first network function, where the first request message is used to request for subscribing to an analytics result;
S620: receiving the subscribed analytics result sent by a fourth network function.

Optionally, in the information obtaining method, the first request message includes an analytics identifier and/or AOI of the requested analytics result.

Optionally, the first network function is one of an access and mobility management function (AMF), a session management function (SMF) and a user plane function (UPF); the fourth network function is one of AMF, SMF and UPF.

In the embodiment of the present disclosure, the fourth network function may be the same as or different from the first network function.

In the second embodiment of the present disclosure, one implementation further provides an information obtaining method, performed by a fourth network function, and the method includes:
receiving an analytics result sent by a second network function;
sending the analytics result to a UE.

Optionally, the second network function is one of NWDAF and AF; the fourth network function is one of AMF, SMF and UPF.

### Third embodiment

The third embodiment of the present disclosure provides an information obtaining method, performed by a first network function. The first network function is an application layer function (AF). As shown in FIG. 7, the method includes:
S710: sending a subscription request to a second network function, where the subscription request is used to request for subscribing to an analytics result.

With the information obtaining method in the third embodiment, the AF can send a subscription request to the second network function to subscribe to the analytics result for the UE, so that the UE obtains the analytics result from the network side.

In the third embodiment, optionally, the second network function is NWDAF. With this embodiment, the UE can subscribe to the NWDAF through the AF and obtain the corresponding analytics result.

In one implementation, optionally, the AF can actively send a subscription request to the NWDAF to request for subscribing to the analytics result for the UE.

Optionally, the subscription request includes at least one of a UE identifier, an analytics identifier and AOI of the requested analytics result. The UE identifier is an identifier of UE which subscribes to the analytics result.

In another embodiment, optionally, the method further includes:
obtaining a first request message sent by the UE through the application layer, where the first request message is used to request for subscribing to the analytics result; or, negotiating, by the UE with the first network function, to request for subscribing to the analytics result;
where the first network function sends the subscription request to the second network function according to the first request message and the negotiation.

In this embodiment, optionally, the subscription request includes at least one of a UE identifier, an analytics identifier and AQI of the requested analytics result.

In the embodiment of the present disclosure, optionally, in the step S710, before sending the subscription request to the second network function, the method further includes:
obtaining the second network function according to local configuration; or obtaining the second network function by sending a query request to a third network function.

Optionally, the third network function is NRF.

Optionally, the query request includes an analytics result identifier and/or AOI requested by the UE.

With this embodiment, in one implementation, AF can determine the NWDAF that can provide the analytics result according to the local configuration; or obtain the NWDAF that can provide the analytics result by sending a query request to the NRF.

In the embodiment of the present disclosure, optionally, after receiving the subscription request sent by the AF, the second network function, i.e., the NWDAF, sends the analytics result subscribed by the UE to the fourth network function.

Optionally, the fourth network function is one of AMF, SMF and AF.

In one embodiment, the second network function, i.e., the NWDAF, can return the analytics result to the UE through an AMF or SMF different from the first network function; in another embodiment, the NWDAF can also return the analytics result to the UE through the AF, that is, returning the analytics result to the UE again through the first network function.

When the NWDAF returns the analytics result to the UE through the AF, the method further includes:
obtaining the analytics result sent by the second network function according to the subscription request;
sending the analytics result to the UE.

In one embodiment, optionally, for the analytics result of a simple model and/or a low query frequency, the NWDAF sends the analytics result to the UE through the AMF and/or SMF; for the analytics result of a complex model and/or a high query frequency, the NWDAF sends the analytics result to the UE through the AF.

With the third embodiment, the UE has the function of able to negotiate with AF through the application layer, or sending a first request message to AF, and able to obtain the subscribed analytics result from at least one of AF, AMF and SMF.

In addition, for AF, it has the function of receiving a request message for requesting to subscribe to the analytics result sent by the UE, and sending a request for subscribing to the analytics result to NWDAF according to the request message; for NWDAF, it has the function of sending the analytics result to at least one of AMF, SMF and UPF.

In the third embodiment of the present disclosure, one implementation further provides an information obtaining method, performed by a second network function. As shown in FIG. 8, the method includes:
S810: receiving a subscription request sent by a first network function, where the subscription request is used to request for subscribing to an analytics result, and the first network function is an application layer function (AF);
S820: according to the subscription request, sending a subscribed analytics result to a fourth network function.

In this implementation, the second network function can obtain the subscription request for subscribing to the analytics result for the UE sent by AF, so that the UE obtains the analytics result from the network side.

Optionally, in the information obtaining method, the subscription request includes at least one of a UE identifier, an analytics identifier and AQI of the requested analytics result.

Optionally, in the information obtaining method, the second network function is NWDAF; the fourth network function is one of AMF, SMF and AF.

In the third embodiment of the present disclosure, one implementation further provides an information obtaining method, performed by a UE. As shown in FIG. 9, the method includes:
S910: receiving an analytics result sent by a fourth network function.

Optionally, in the information obtaining method, the fourth network function is one of AMF, SMF, and AF.

Optionally, in the information obtaining method, before receiving the analytics result sent by the fourth network function, the method further includes:
sending a first request message to a first network function, where the first request message is used to request for subscribing to the analytics result; or, negotiating, by the UE with the first network function to request for subscribing to the analytics result.

The first network function is AF.

Optionally, in the information obtaining method, the first request message includes an analytics identifier and/or an AOI of the requested analytics result.

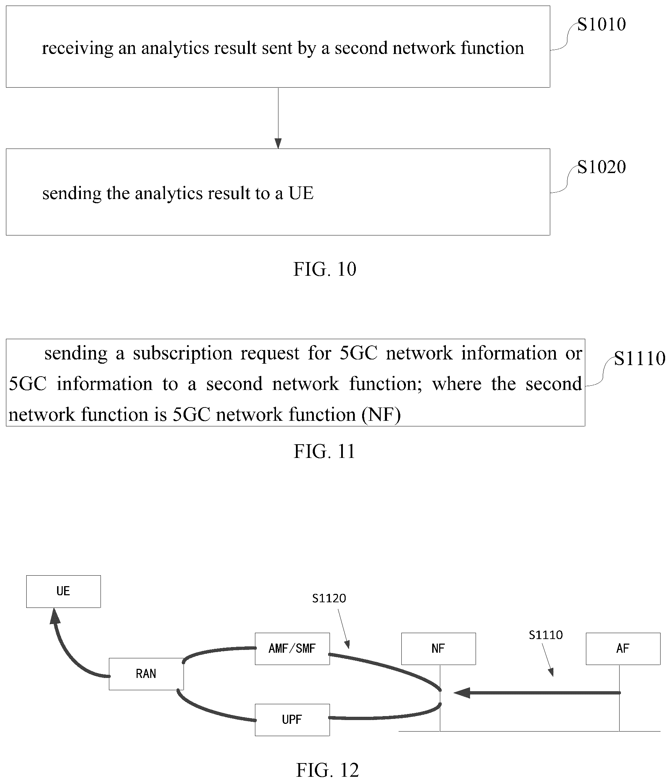

In the third embodiment of the present disclosure, one implementation further provides an information obtaining method, performed by a fourth network function. As shown in FIG. 10, the method includes:
S1010: receiving an analytics result sent by a second network function;
S1020: sending the analytics result to a UE.

Optionally, the second network function is NWDAF; the fourth network function is one of AMF, SMF and AF.

### Fourth embodiment

In the fourth embodiment of the present disclosure, an information obtaining method is provided and is performed by a first network function. The first network function is AF. As shown in FIG. 11, the method includes:
S1110: sending a subscription request for SGC network information or SGC information to a second network function; where the second network function is SGC network function (NF).

With the information obtaining method in this embodiment, the AF can send a subscription request for SGC network information or SGC information to the SGC NF, so that the UE obtains the SGC network information or SGC information from the network side.

Optionally, in one embodiment, the AF can actively send a subscription request to the SGC NF to request for subscribing to SGC network information or SGC information for the UE.

In another embodiment, optionally, the method further includes:
obtaining a first request message sent by the UE; where the first request message is used to request for subscribing to SGC network information or SGC information, and the first request message includes at least one of UE identifier, AOI, SGC network information identifier and SGC information identifier;
sending the subscription request to the second network function according to the first request message.

In another embodiment, optionally, the UE can also negotiate with AF to request for subscribing to SGC network information or SGC information; according to the negotiation between the UE and AF, AF sends a subscription request to SGC NF to request for subscribing to SGC network information or SGC information for the UE.

In the fourth embodiment of the present disclosure, optionally, the subscription request includes at least one of UE identifier, AOI, SGC network information identifier and SGC information identifier.

In the embodiment of the present disclosure, optionally, in the step S1110, after sending a subscription request for SGC network information or SGC information to the second network function, the method further includes:
obtaining the second network function according to local configuration; or obtaining the second network function by sending a query request to a third network function; where the third network function is NRF.

Optionally, the query request includes at least one of UE identifier, AOI, SGC network information identifier and SGC information identifier.

Combined with FIG. 12, in the step S1110, after AF sends a subscription request for SGC network information or SGC information to SGC NF, in the step S1120, SGC NF sends the subscribed SGC network information or SGC information to a fourth network function.

Optionally, the fourth network function is one of AMF, MF, the user plane function UPF and AF.

With this implementation, the SGC NF can return SGC network information or SGC information to the UE through at least one of AMF, SMF, UPF and AF.

Optionally, the SGC network information or SGC information returned by AMF, SMF, UPF and AF includes at least one of throughput, rate, latency, packet transmission, packet retransmission, mobility information and location information.

In the embodiment of the present disclosure, optionally, when the SGC NF returns SGC network information or SGC information through the AF, the method is applied to AF and further includes:
obtaining the SGC network information or SGC information sent by the second network function according to the subscription request;
sending the SGC network information or the SGC information to the UE.

With this implementation, after sending a subscription request to the SGC network function NF, the AF can receive the SGC network information or SGC information returned by the SGC network function NF, and send the received SGC network information or SGC information to the UE.

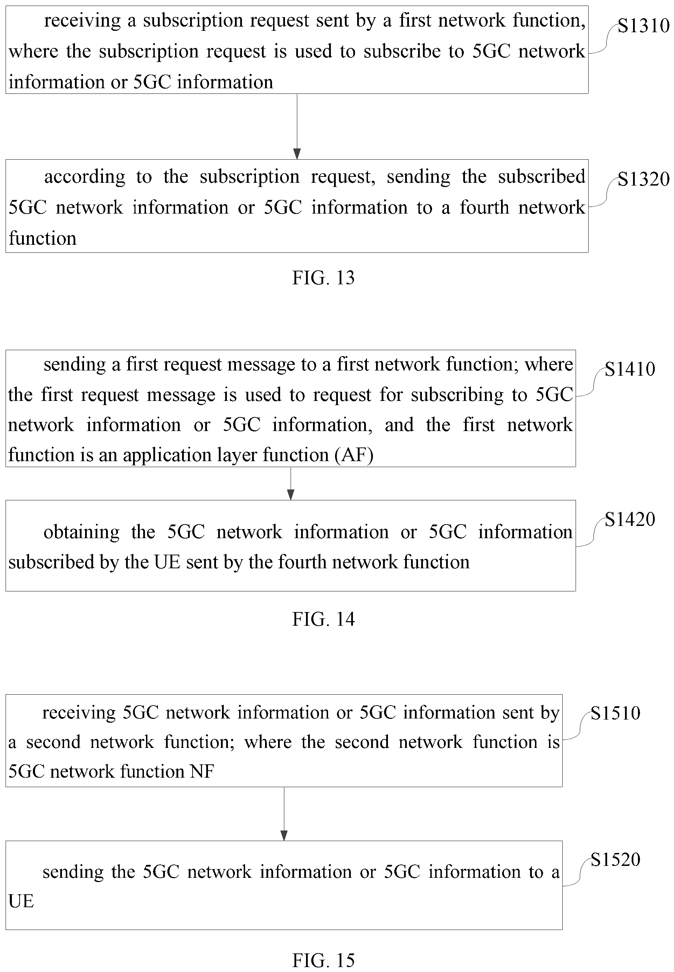

In the fourth embodiment of the present disclosure, one implementation further provides an information obtaining method, performed by a second network function. The second network function is SGC network function NF. As shown in FIG. 13, the method includes:
S1310: receiving a subscription request sent by a first network function, where the subscription request is used to subscribe to SGC network information or SGC information;
S1320: according to the subscription request, sending the subscribed SGC network information or SGC information to a fourth network function.

Optionally, in the information obtaining method, the subscription request includes at least one of UE identifier, AOI, SGC network information identifier and SGC information identifier.

Optionally, in the information obtaining method, the fourth network function is one of AMF, SMF, the user plane function UPF and AF.

In the fourth embodiment of the present disclosure, one implementation further provides an information obtaining method, performed by a UE. As shown in FIG. 14, the method includes:
S1410: sending a first request message to a first network function; where the first request message is used to request for subscribing to SGC network information or SGC information, and the first network function is an application layer function (AF).
S1420: obtaining the SGC network information or SGC information subscribed by the UE sent by the fourth network function.

Optionally, in the information obtaining method, the first request message includes at least one of UE identifier, AOI, SGC network information identifier and SGC information identifier.

Optionally, in the information obtaining method, the fourth network function is one of AMF, SMF, UPF and AF.

In the fourth embodiment of the present disclosure, one implementation further provides an information obtaining method, performed by a fourth network function. As shown in FIG. 15, the method includes:
S1510: receiving SGC network information or SGC information sent by a second network function; where the second network function is SGC network function NF;
S1520: sending the SGC network information or SGC information to a UE.

Optionally, in the information obtaining method, the fourth network function is one of AMF, SMF, UPF and AF.

### Fifth embodiment

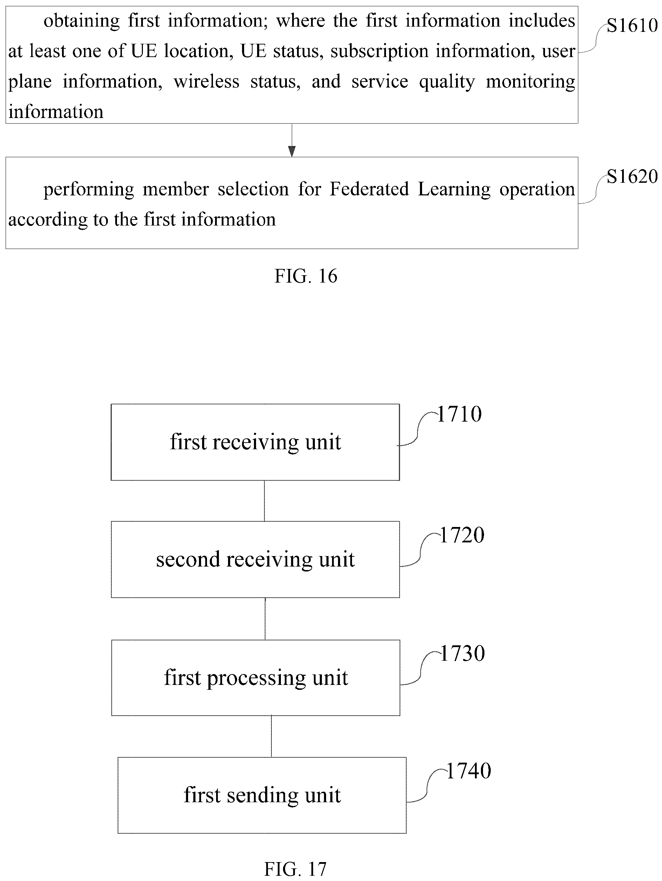

The fifth embodiment of the present disclosure provides an information obtaining method, performed by a first network function. The first network function is an AF, or a NWDAF. As shown in FIG. 16, the method includes:
S1610: obtaining first information; where the first information includes at least one of UE location, UE status, subscription information, user plane information, wireless status, and service quality monitoring information;
S1620: performing member selection for Federated Learning operation according to the first information.

With the information obtaining method in this embodiment, the AF or NWDAF can obtain the first information including at least one of UE location, UE status, subscription information, user plane information, wireless status, and service quality monitoring information, and then perform member selection for federated learning operation according to the first information.

Optionally, the method includes:
sending a subscription request to an AMF;
the obtaining the first information includes:
obtaining at least one of the UE location, UE status, and subscription information sent by the AMF according to the subscription request.

Optionally, the wireless status includes at least one of reference signal receiving power (RSRP), reference signal receiving quality (RSRQ), signal to interference plus noise ratio (SINR) and radio resource utilization. The user plane information includes at least one of throughput, session resource utilization, rate, delay, packet transmission and packet retransmission. The service quality monitoring information includes packet delay.

Optionally, when the first network function is AF, the method further includes:
sending a subscription request to NWDAF;
the obtaining the first information includes:
obtaining the wireless status sent by the NWDAF according to the subscription request; where the NWDAF obtains the wireless status by collecting data though operation administration and maintenance (OAM).

Optionally, when the first network function is NWDAF, the method further includes:
obtaining the wireless status by collecting data through the operation administration and maintenance (OAM); where the wireless status includes at least one of RSRP, RSRQ, SINR and radio resource utilization rate.

In another embodiment, optionally, the method further includes:
sending a subscription request to the user plane function UPF;
the obtaining of the first information includes:
obtaining the user plane information sent by the UPF.

In another embodiment, optionally, the method further includes:
sending a service quality monitoring request to a policy control function (PCF);
the obtaining of the first information includes:
   obtaining the service quality monitoring information sent by UPF, where the service quality monitoring information includes packet delay, the PCF sends the service quality monitoring request to the UPF through SMF, and the UPF sends a service quality monitoring request response to the first network function according to the service quality monitoring request; the service quality monitoring request response includes the packet delay.

Optionally, when the first network function is AF, the UPF sends the service quality monitoring request response to the AF in one of the following ways:
sending the service quality monitoring request response to the AF;
sending the service quality monitoring request response to the AF through Network Exposure Function (NEF);
sending the service quality monitoring request response to the AF through SMF and PCF; or
when the first network function is NWDAF, the UPF sends the service quality monitoring request response to the NWDAF in one of the following ways:
sending the service quality monitoring request response to the NWDAF;
sending the service quality monitoring request response to the NWDAF through SMF and PCF.

Optionally, in the information obtaining method, the subscription request includes at least one of AOI of the requested UE, Single Network Slice Selection Assistance information (S-NSSAI), UE identifier, UE list and UE group.

Optionally, in the information obtaining method, the service quality monitoring request includes at least one of AOI of the requested UE, single network slice selection assistance information (S-NSSAI), UE identifier, UE list and UE group.

With the information obtaining method in this embodiment, in one implementation, when the first network function is AF, one specific implementation process of the information obtaining method according to the fifth embodiment of the present disclosure includes the following steps:
At step 1, AF sends a subscription request to AMF and UPF respectively; the subscription request includes at least one of AOI of the requested UE, S-NSSAI, UE identifier, UE list and UE group;
AF sends a subscription request to NWDAF to request for subscribing to wireless status or wireless channel condition;

AF sends a service quality (QoS) monitoring request to PCF, where the service quality monitoring request includes at least one of AOI of the requested UE, S-NSSAI, UE identifier, UE list and UE group. Optionally, for untrusted AF, AF needs to send a service quality monitoring request to PCF through NEF.
At step 2, AF receives a response message returned by AMF according to the subscription request, and the response message includes at least one of the UE location, UE status and subscription information. Optionally, the subscription information is subscription information indicating whether the UE supports Federated Learning;

AF receives a response message returned by UPF according to the subscription request, and the response message includes at least one of throughput, session resource utilization, rate, delay, packet transmission and packet retransmission.

AF receives a response message returned by NWDAF according to the subscription request, and the response message includes wireless status; the wireless status includes at least one of RSRP, RSRQ, SINR and radio resource utilization. Optionally, NWDAF obtains the wireless status by collecting data through OAM.

After sending a service quality monitoring request to PCF, receiving service quality monitoring information sent by UPF; optionally, PCF sends a service quality monitoring request to UPF through SMF, and UPF sends a service quality monitoring request response to the AF according to the service quality monitoring request; the service quality monitoring request response includes the packet delay;

Where UPF sends the service quality monitoring request response to the AF in one of the following ways:
sending the service quality monitoring request response to the AF;
sending the service quality monitoring request response to the AF through NEF;
sending the service quality monitoring request response to the AF through SMF and PCF.

At step 3, AF performs member selection for Federated Learning operation based on the above first information.

In another implementation of the embodiment of the present disclosure, when the first network function is NWDAF, the method further includes:
obtaining a first request message sent by AF; obtaining the first information according to the first request message;
after selecting a federated learning member according to the first information, sending the selected federated learning member to the AF.

In addition, when the first network function is NWDAF, the method further includes:
obtaining wireless status by collecting data through OAM; where the wireless status includes at least one of RSRP, RSRQ, SINR and radio resource utilization rate.

With the information obtaining method in this embodiment, in one implementation, when the first network function is NWDAF, one specific implementation process of the information obtaining method according to the fifth embodiment of the present disclosure includes the following steps:
At step 1, AF sends a first request message to NWDAF, and NWDAF obtains first information according to the received first request message.
At step 2, NWDAF sends a subscription request to AMF and UPF respectively; the subscription request includes at least one of AOI of requested UE, S-NSSAI, UE identifier, UE list and UE group.

NWDAF obtain wireless status by collecting data through OAM.

NWDAF sends a service quality (QoS) monitoring request to PCF, where the service quality monitoring request includes at least one of AOI of requested UE, S-NSSAI, UE identifier, UE list and UE group.

At step 3, NWDAF receives a response message returned by AMF according to the subscription request, and the response message includes at least one of UE location, UE status and subscription information; optionally, the subscription information is subscription information indicating whether the UE supports Federated Learning.

NWDAF receives a response message returned by UPF according to the subscription request, and the response message includes user plane information; the user plane information includes at least one of throughput, session resource utilization, rate, delay, packet transmission and packet retransmission.

NWDAF obtains the wireless status by collecting data through OAM; the wireless status includes at least one of RSRP, RSRQ, SINR and radio resource utilization. After sending a service quality monitoring request to the PCF, the service quality monitoring information sent by the UPF is received. Optionally, the PCF sends a service quality monitoring request to the UPF through the SMF, and the UPF sends a service quality monitoring request response to the NWDAF according to the service quality monitoring request; the service quality monitoring request response includes packet delay.

The UPF sends the service quality monitoring request response to the NWDAF in one of the following ways:
sending the service quality monitoring request response to the NWDAF;
sending the service quality monitoring request response to the NWDAF through the SMF and the PCF.

At step 4, the NWDAF performs member selection for federated learning operation according to the above first information.

At step 5, after selecting a federated learning member, sending the selected federated learning member to the AF.

With the information obtaining method in the fifth embodiment, the AF or NWDAF can subscribe to UE status from the SGC NF, to perform member selection for Federated Learning operation.

One embodiment of the present disclosure further provides a network device. The network device is a first network function, including a transceiver and a processor.

The transceiver is used to receive a first request message sent by a UE, where the first request message is used to request to obtain an allowed analytics identifier.

The processor is used to obtain a subscribed analytics identifier of the UE and/or an analytics identifier supported by a network side, according to the first request message.

The processor is further used to determine the allowed analytics identifier of the UE according to the subscribed analytics identifier of the UE and/or the analytics identifier supported by the network side.

The transceiver is further used to send the allowed analytics identifier to the UE.

Optionally, in the network device, when obtaining a subscribed analytics identifier of the UE according to the first request message, the processor is used to:
according to the first request message, send a second request message to a second network function, and obtain the subscribed analytics identifier of the UE sent by the second network function according to the second request message.

Optionally, in the network device, when obtaining an analytics identifier supported by a network side according to the first request message, the processor is used to:
according to the first request message, obtain the analytics identifier supported by the network side by using local configuration; or, obtain the analytics identifier supported by the network side by sending a query request to a third network function.

Optionally, in the network device, the first request message includes the analytics identifier and/or area of interest (AOI) requested by the UE.

Optionally, in the network device, the first network function is one of AMF and SMF; the second network function is one of AF and UDM.

Optionally, in the network device, the first network function is one of AMF and SMF; the third network function is NRF.

One embodiment of the present disclosure further provides a UE, including a transceiver. The transceiver is used to,
send a first request message to a first network function, where the first request message is used to request for an allowed analytics identifier; and
receive the allowed analytics identifier sent by the first network function.

Optionally, according to the UE, the first request message includes analytics identifier and/or AOI requested by the UE.

Optionally, according to the UE, the first network function is one of AMF and SMF.

One embodiment of the present disclosure further provides a network device. The network device is a first network function, including a transceiver. The transceiver is used to:
receive a first request message sent by a UE, where the first request message is used to request for subscribing to an analytics result; and
send a subscription request to a second network function according to the first request message, for subscribing to the analytics result.

Optionally, in the network device, the transceiver is further used to:
obtain the analytics result sent by the second network function according to the subscription request;
send the analytics result to the UE.

Optionally, in the network device, after receiving the first request message, the transceiver is further used to:
according to local configuration, obtain the second network function that supports providing the analytics result to the UE; or obtain the second network function by sending a query request to a third network function.

Optionally, in the network device, the first request message, the subscription request and the query request respectively include an analytics identifier and/or AOI of the requested analytics result.

Optionally, in the network device, the subscription request further includes address information of the UE.

Optionally, in the network device, the first network function is one of AMF, SMF and UPF; the second network function is one of NWDAF and AF; the third network function is NRF.

One embodiment of the present disclosure further provides a network device. The network device is a second network function and includes a transceiver. The transceiver is used to:
receive a subscription request sent by a first network function, where the subscription request is used to request for subscribing to an analytics result;
sending the subscribed analytics results to the fourth network function according to the subscription request.

Optionally, in the network device, the subscription request includes an analytics identifier and/or AOI of the requested analytics result.

Optionally, in the network device, the first network function is one of AMF, t SMF and UPF; the second network function is one of NWDAF and AF; the fourth network function is one of AMF, SMF and UPF.

One embodiment of the present disclosure further provides a UE, including a transceiver. The transceiver is used to:
send a first request message to a first network function, where the first request message is used to request for subscribing to an analytics result; and
receive the subscribed analytics result sent by the fourth network function.

Optionally, in the UE, the first request message includes an analytics identifier and/or AOI of the requested analytics result.

Optionally, in the UE, the first network function is one of AMF, SMF and UPF; the fourth network function is one of AMF, SMF and UPF.

One embodiment of the present disclosure further provides a network device. The network device is a first network function, and the first network function is AF and includes a transceiver. The transceiver is used to:
send a subscription request to a second network function, where the subscription request is used to request for subscribing to an analytics result.

Optionally, in the network device, wherein the transceiver is further used to:
obtain a first request message sent by the UE through an application layer, where the first request message is used to request for subscribing to the analytics result; or, negotiating with the UE to request for subscribing to the analytics result;
according to the first request message and the negotiation, send the subscription request to the second network function.

Optionally, in the network device, the transceiver is further used to:
obtain the analytics result sent by the second network function according to the subscription request;
send the analytics result to the UE.

Optionally, in the network device, the transceiver is further used to:
obtain the second network function according to local configuration; or obtain the second network function by sending a query request to the third network function.

Optionally, in the network device, the second network function is NWDAF; and the third network function is NRF.

Optionally, in the network device, the first request message includes an analytics identifier and/or AOI of the requested analytics result.

Optionally, in the network device, the subscription request includes at least one of UE identifier, an analytics identifier and AQI of the requested analytics result.

One embodiment of the present disclosure further provides a network device. The network device is a second network function, and includes a transceiver. The transceiver is used to:
receive a subscription request sent by a first network function, where the subscription request is used to request for subscription to an analytics result; where the first network function is AF;
send the subscribed analytics result to a fourth network function according to the subscription request.

Optionally, in the network device, the subscription request includes at least one of a UE identifier, an analytics identifier and an AOI of the requested analytics result.

Optionally, in the network device, the second network function is NWDAF; and the fourth network function is one of AMF, SMF, and AF.

One embodiment of the present disclosure further provides a UE, including a transceiver. The transceiver is used to:
receive an analytics result sent by a fourth network function.

Optionally, in the UE, the fourth network function is one of AMF, SMF, and AF.

Optionally, in the UE, before receiving the analytics result sent by the fourth network function, the transceiver is further used to:
send a first request message to the first network function, where the first request message is used to request for subscribing to the analytics result; or, negotiating with the first network function to request for subscribing to the analytics result;
where the first network function is AF.

Optionally, in the UE, the first request message includes an analytics identifier and/or AOI of the requested analytics result.

One embodiment of the present disclosure further provides a network device. The network device is a fourth network function, and includes a transceiver. The transceiver is used to:
receive an analytics result sent by a second network function;
send the analytics result to a UE.

Optionally, in the network device, the second network function is NWDAF; the fourth network function is one of AMF, SMF and an AF.

Optionally, in the network device, the second network function is one of NWDAF and AF; the fourth network function is one of AMF, SMF and UPF.

One embodiment of the present disclosure further provides a network device. The network device is a first network function, the first network function is AF and includes a transceiver. The transceiver is used to:
send a subscription request for SGC network information or SGC information to a second network function; where the second network function is a 5 GC NF.

Optionally, in the network device, the transceiver is further used to:
obtain the SGC network information or SGC information sent by the second network function according to the subscription request;
send the SGC network information or the SGC information to the UE.

Optionally, in the network device, the transceiver is further used to:
obtain a first request message sent by the UE; where the first request message is used to request for subscribing to SGC network information or SGC information, the first request message includes at least one of a UE identifier, AOI, a SGC network information identifier, and a SGC information identifier;
sending the subscription request to the second network function according to the first request message.

Optionally, in the network device, the transceiver is further used to:
obtain the second network function according to local configuration; or obtain the second network function by sending a query request to a third network function; where the third network function is NRF.

Optionally, in the network device, the subscription request includes at least one of a UE identifier, AOI, a SGC network information identifier, and a SGC information identifier.

One embodiment of the present disclosure further provides a network device. The network device is a second network function, the second network function is a SGC NF and includes a transceiver. The transceiver is used to:
receive a subscription request sent by a first network function, where the subscription request is used to subscribe to SGC network information or SGC information;
send the subscribed SGC network information or SGC information to the fourth network function according to the subscription request.

Optionally, in the network device, the subscription request includes at least one of a UE identifier, AOI, a SGC network information identifier, and a SGC information identifier.

Optionally, in the network device, the fourth network function is one of AMF, SMF, UPF, and AF.

One embodiment of the present disclosure further provides a UE, including a transceiver. The transceiver is used to:
send a first request message to a first network function; where the first request message is used to request for subscribing to SGC network information or SGC information; where the first network function is AF;
obtain SGC network information or SGC information subscribed by the UE sent by a fourth network function.

Optionally, in the UE, the first request message includes at least one of a UE identifier, AOI, a SGC network information identifier, and a SGC information identifier.

Optionally, in the UE, the fourth network function is one of AMF, SMF, UPF, and AF.

One embodiment of the present disclosure further provides a network device. The network device is a fourth network function and includes a transceiver. The transceiver is used to:
receive 5GC network information or SGC information sent by a second network function; where the second network function is a SGC NF;
send the SGC network information or SGC information to a UE.

Optionally, in the network device, the fourth network function is one of AMF, SMF, UPF and AF.

One embodiment of the present disclosure further provides a network device. The network device is a first network function, the first network function is AF or NWDAF, and includes a transceiver. The transceiver is used to:
obtain first information; where the first information includes at least one of UE location, UE status, subscription information, user plane information, wireless status and service quality monitoring information;
select a federated learning member according to the first information.

Optionally, in the network device, the transceiver is further used to:
send a subscription request to AMF;
when obtaining the first information, the transceiver is further used to:
obtain at least one of the UE location, UE status and subscription information sent by the AMF according to the subscription request.

Optionally, in the network device, when the first network function is AF, the transceiver is further used to:
send a subscription request to NWDAF;
when obtaining the first information, the transceiver is further used to:
obtain the wireless status sent by the NWDAF according to the subscription request; where the NWDAF obtains the wireless status by collecting data though operation administration and maintenance (OAM), the wireless status includes at least one of RSRP, RSRQ, SINR and radio resource utilization rate.

Optionally, in the network device, when the first network function is NWDAF, the transceiver is further used to:
obtain the wireless status by collecting data through the operation administration and maintenance (OAM); where the wireless status includes at least one of RSRP, RSRQ, SINR and radio resource utilization rate.

Optionally, in the network device, the transceiver is further used to:
send a subscription request to UPF;
when obtaining the first information, the transceiver is further used to:
obtain user plane information sent by the UPF; where the user plane information includes at least one of throughput, session resource utilization, rate, delay, packet transmission and packet retransmission.

Optionally, in the network device, the transceiver is further used to:
send a service quality monitoring request to PCF;
when obtaining the first information, the transceiver is further used to:
obtain the service quality monitoring information sent by UPF, where the service quality monitoring information includes packet delay, the PCF sends the service quality monitoring request to the UPF through SMF, and the UPF sends a service quality monitoring request response to the first network function according to the service quality monitoring request; the service quality monitoring request response includes the packet delay.

Optionally, in the network device, when the first network function is AF, the UPF sends the service quality monitoring request response to the AF in one of the following ways:
sending the service quality monitoring request response to the AF;
sending the service quality monitoring request response to the AF through Network Exposure Function (NEF);
sending the service quality monitoring request response to the AF through SMF and PCF; or
when the first network function is NWDAF, the UPF sends the service quality monitoring request response to the NWDAF in one of the following ways:
sending the service quality monitoring request response to the NWDAF;
sending the service quality monitoring request response to the NWDAF through SMF and PCF.

Optionally, in the network device, the subscription request includes at least one of AOI of the requested UE, Single Network Slice Selection Assistance information (S-NSSAI), UE identifier, UE list and UE group.

Optionally, in the network device, the service quality monitoring request includes at least one of AOI of the requested UE, single network slice selection assistance information (S-NSSAI), UE identifier, UE list and UE group.

Optionally, in the network device, when the first network function is NWDAF, the transceiver is further used to:
obtain a first request message sent by AF; according to the first request message, obtain the first information;
after selecting a federated learning member according to the first information, send the selected federated learning member to the AF.

One embodiment of the present disclosure further provides an information obtaining device, applied to a first network function. As shown in FIG. 17, the device includes:
a first receiving unit 1710 used to receive a first request message sent by a user equipment (UE), where the first request message is used to request to obtain an allowed analytics identifier;
a second receiving unit 1720 used to obtain a subscribed analytics identifier of the UE and/or an analytics identifier supported by a network side, according to the first request message;
a first processing unit 1730 used to determine the allowed analytics identifier of the UE according to the subscribed analytics identifier of the UE and/or the analytics identifier supported by the network side;
a first sending unit 1740 used to send the allowed analytics identifier to the UE.

Optionally, the information obtaining device, when obtaining a subscribed analytics identifier of the UE according to the first request message, the second receiving unit 1720 is further used to,
according to the first request message, send a second request message to a second network function, and obtain the subscribed analytics identifier of the UE sent by the second network function according to the second request message.

Optionally, the information obtaining device, when obtaining an analytics identifier supported by a network side according to the first request message, the second receiving unit 1720 is further used to,
according to the first request message, obtain the analytics identifier supported by the network side by using local configuration; or, obtain the analytics identifier supported by the network side by sending a query request to a third network function.

Optionally, in the information obtaining device, the first request message includes the analytics identifier and/or area of interest (AOI) requested by the UE.

Optionally, in the information obtaining device, the first network function is one of AMF and SMF; the second network function is one of AF and UDM.

Optionally, in the information obtaining device, the first network function is one of AMF and SMF; the third network function is NRF.

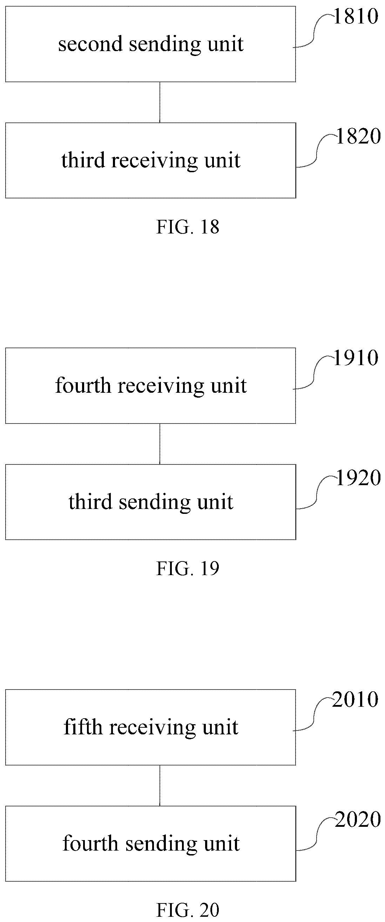

One embodiment of the present disclosure further provides an information obtaining device, applied to a UE. As shown in FIG. 18, the device includes:
a second sending unit 1810 used to send a first request message to a first network function, where the first request message is used to request for an allowed analytics identifier;
a third receiving unit 1820 used to receive the allowed analytics identifier sent by the first network function.

Optionally, in the information obtaining device, the first request message includes an analytics identifier and/or AOI requested by the UE.

Optionally, in the information obtaining device, the first network function is one of AMF and SMF.

One embodiment of the present disclosure further provides an information obtaining device, applied to a first network function. As shown in FIG. 19, the device includes:
a fourth receiving unit 1910 used to receive a first request message sent by a UE, where the first request message is used to request for subscribing to an analytics result;
a third sending unit 1920 used to send a subscription request to a second network function according to the first request message, for subscribing to the analytics result.

Optionally, in the information obtaining device, the fourth receiving unit 1910 is further used to obtain the analytics result sent by the second network function according to the subscription request;
the third sending unit 1920 is further used to send the analytics result to the UE.

Optionally, in the information obtaining device, the fourth receiving unit 1910 is further used to:
according to local configuration, obtain the second network function that supports providing the analytics result to the UE; or obtain the second network function by sending a query request to a third network function.

Optionally, in the information obtaining device, the first request message, the subscription request and the query request respectively include the analytics identifier and/or AOI of the requested analytics result.

Optionally, in the information obtaining device, the subscription request further includes address information of the UE.

Optionally, in the information obtaining device, the first network function is one of AMF, SMF and UPF; the second network function is one of NWDAF and AF; the third network function is NRF.

One embodiment of the present disclosure further provides an information obtaining device, applied to a second network function. As shown in FIG. 20, the device includes:
a fifth receiving unit 2010 used to receive a subscription request sent by a first network function, where the subscription request is used to request for subscribing to an analytics result;
a fourth sending unit 2020 used to send the subscribed analytics result to the fourth network function according to the subscription request.

Optionally, in the information obtaining device, the subscription request includes an analytics identifier and/or AOI of the requested analytics result.

Optionally, in the information obtaining device, the first network function is one of AMF, SMF and UPF; the second network function is one of NWDAF and AF; the fourth network function is one of AMF, SMF and UPF.

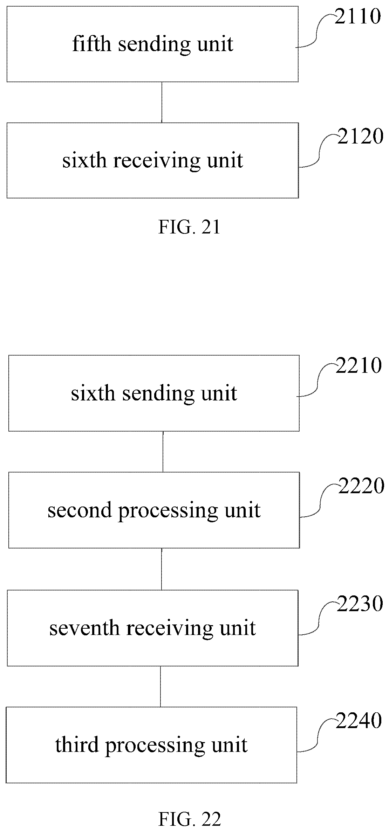

One embodiment of the present disclosure further provides an information obtaining device, applied to a UE. As shown in FIG. 21, the device includes:
a fifth sending unit 2110 used to send a first request message to a first network function, where the first request message is used to request for subscribing to an analytics result;
a sixth receiving unit 2120 used to receive the subscribed analytics result sent by a fourth network function.

Optionally, in the information obtaining device, the first request message includes an analytics identifier and/or AOI of the requested analytics result.

Optionally, in the information obtaining device, the first network function is one of AMF, SMF and UPF; the fourth network function is one of AMF, SMF and UPF.

One embodiment of the present disclosure further provides an information obtaining device, applied to a first network function, and the first network function is AF. As shown in FIG. 22, the device includes:
a sixth sending unit 2210 used to send a subscription request to a second network function, where the subscription request is used to request for subscribing an analytics result.

Optionally, the information obtaining device further includes:
a second processing unit 2220 used to obtain a first request message sent by the UE through the application layer, where the first request message is used to request for subscribing to the analytics result; or, negotiate with the UE to request for subscribing to the analytics result;
according to the first request message and the negotiation, send the subscription request to the second network function.

Optionally, the information obtaining device further includes:
a seventh receiving unit 2230 used to obtain the analytics result sent by the second network function according to the subscription request;
the sixth sending unit 2210 is further used to send the analytics result to the UE.

Optionally, the information obtaining device further includes:
a third processing unit 2240 used to obtain the second network function according to local configuration; or obtain the second network function by sending a query request to a third network function.

Optionally, in the information obtaining device, the second network function is NWDAF; the third network function is NRF.

Optionally, in the information obtaining device, the first request message includes an analytics identifier and/or AOI of the requested analytics result.

Optionally, in the information obtaining device, the subscription request includes at least one of the UE identifier, an analytics identifier and AOI of the requested analytics result.

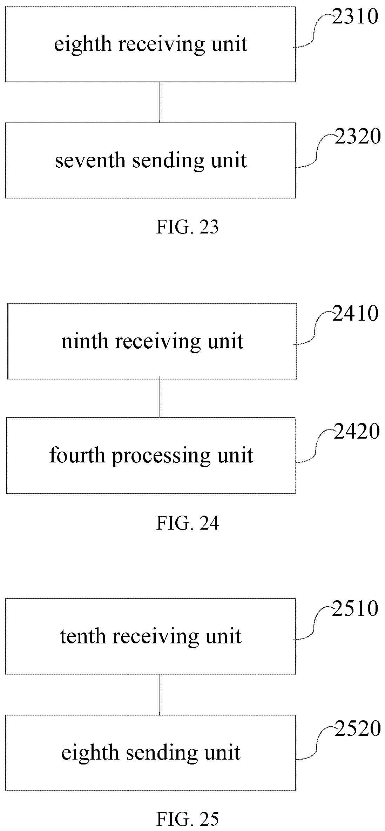

One embodiment of the present disclosure further provides an information obtaining device, applied to a second network function. As shown in FIG. 23, the device includes:
an eighth receiving unit 2310 used to receive a subscription request sent by a first network function, where the subscription request is used to request for subscribing an analytics result, and the first network function is function AF;
a seventh sending unit 2320 used to send the subscribed analytics result to a fourth network function according to the subscription request.

Optionally, in the information obtaining device, the subscription request includes at least one of a UE identifier, an analytics identifier and AOI of the requested analytics result.

Optionally, in the information obtaining device, the second network function is NWDAF; the fourth network function is one of AMF, SMF and the AF.

One embodiment of the present disclosure further provides an information obtaining device, applied to a UE. As shown in FIG. 24, the device includes:
a ninth receiving unit 2410 used to receive an analytics result sent by a fourth network function.

Optionally, in the information obtaining device, the fourth network function is one of AMF, SMF and the F.

Optionally, the information obtaining device, further includes a fourth processing unit 2420 used to, before the ninth receiving unit 2410 receives the analytics result sent by the fourth network function,
send a first request message to the first network function, where the first request message is used to request for subscribing to the analytics result; or, negotiate with the first network function to request for subscribing to the analytics result;
where the first network function is AF.

Optionally, in the information obtaining device, the first request message includes an analytics identifier and/or AOI of the requested analytics result.

One embodiment of the present disclosure further provides an information obtaining device, applied to a fourth network function. As shown in FIG. 25, the device includes:
a tenth receiving unit 2510 used to receive an analytics result sent by a second network function;
an eighth sending unit 2520 used to send the analytics result to a UE.

Optionally, in the information obtaining device, the second network function is NWDAF; the fourth network function is one of AMF, SMF and AF.

Optionally, in the information obtaining device, the second network function is one of NWDAF and AF; the fourth network function is one of AMF, SMF and UPF.

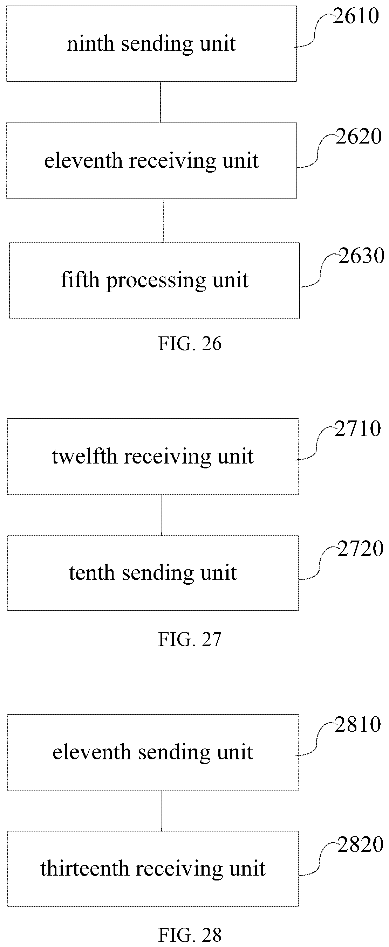

One embodiment of the present disclosure further provides an information obtaining device, applied to a first network function. The first network function is AF. As shown in FIG. 26, the device includes:
a ninth sending unit 2610 used to send a subscription request for SGC network information or SGC information to a second network function; where the second network function is the SGC NF.

Optionally, in the information obtaining device, the ninth sending unit 2610 is further used to:
obtain the SGC network information or SGC information sent by the second network function according to the subscription request;
send the SGC network information or the SGC information to the UE.

Optionally, the information obtaining device further includes:
an eleventh receiving unit 2620 used to obtain a first request message sent by the UE; where the first request message is used to request for subscribing to SGC network information or SGC information, and the first request message includes at least one of a UE identifier, AOI, a SGC network information identifier, and a SGC information identifier;
the ninth sending unit 2610 sends the subscription request to the second network function according to the first request message.

Optionally, the information obtaining device further includes:
a fifth processing unit 2630 used to obtain the second network function according to local configuration; or obtain the second network function by sending a query request to a third network function; where the third network function is NRF.

Optionally, in the information obtaining device, the subscription request includes at least one of a UE identifier, AOI, a SGC network information identifier, and a SGC information identifier.

One embodiment of the present disclosure further provides an information obtaining device, applied to a second network function. The second network function is 5GC NF. As shown in FIG. 27, the device includes:
a twelfth receiving unit 2710 used to receive a subscription request sent by a first network function, where the subscription request is used to subscribe to SGC network information or SGC information;
a tenth sending unit 2720 used to send the subscribed SGC network information or SGC information to a fourth network function according to the subscription request.

Optionally, in the information obtaining device, the subscription request includes at least one of a UE identifier, AOI, a SGC network information identifier, and a SGC information identifier.

Optionally, in the information obtaining device, the fourth network function is one of AMF, SMF, UPF, and AF.

One embodiment of the present disclosure further provides an information obtaining device, applied to a UE. As shown in FIG. 28, the device includes:
an eleventh sending unit 2810 used to send a first request message to a first network function; where the first request message is used to request for subscribing to SGC network information or SGC information, and the first network function is AF;
a thirteenth receiving unit 2820 used to obtain the SGC network information or SGC information subscribed by the UE sent by the fourth network function.

Optionally, in the information obtaining device, the first request message includes at least one of a UE identifier, AOI, a SGC network information identifier and a SGC information identifier.

Optionally, in the information obtaining device, the fourth network function is one of AMF, SMF, UPF and AF.

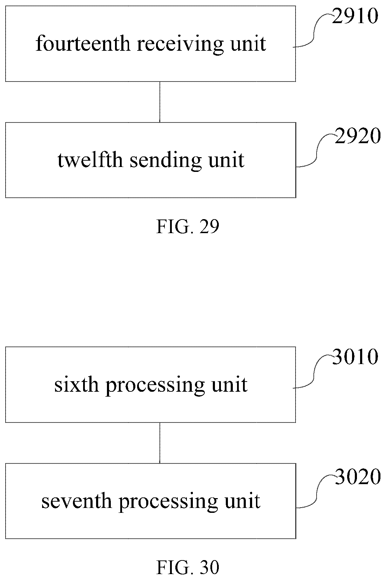

One embodiment of the present disclosure further provides an information obtaining device, applied to a fourth network function. As shown in FIG. 29, the device includes:
a fourteenth receiving unit 2910 used to receive 5GC network information or 5GC information sent by a second network function; where the second network function is 5GC NF;
a twelfth sending unit 2920 used to send the 5GC network information or 5GC information to the UE.

Optionally, in the information obtaining device, the fourth network function is one of AMF, SMF, UPF and AF.

One embodiment of the present disclosure further provides an information obtaining device, applied to a first network function. The first network function is AF or NWDAF. As shown in FIG. 30, the device includes:
a sixth processing unit 3010 used to obtain the first information; where the first information includes at least one of UE location, UE status, subscription information, user plane information, wireless status and service quality monitoring information;
a seventh processing unit 3020 used to select a federated learning member according to the first information.

Optionally, in the information obtaining device, the sixth processing unit 3010 is used to:
send a subscription request to AMF;
the obtaining of the first information includes:
obtaining at least one of UE location, UE status and subscription information sent by the AMF according to the subscription request.

Optionally, in the information obtaining device, when the first network function is AF, the sixth processing unit 3010 is further used to:
send a subscription request to NWDAF;
the obtaining of the first information includes:
   obtaining wireless status sent by the NWDAF according to the subscription request; where the NWDAF obtains the wireless status by collecting data though operation administration and maintenance (OAM), the wireless status includes at least one of RSRP, RSRQ, SINR and radio resource utilization rate.

Optionally, in the information obtaining device, when the first network function is NWDAF, the sixth processing unit 3010 is further used to:
obtain the wireless status by collecting data through the operation administration and maintenance (OAM); where the wireless status includes at least one of RSRP, RSRQ, SINR and radio resource utilization rate.

Optionally, in the information obtaining device, the sixth processing unit 3010 is further used to:
send a subscription request to UPF;
the obtaining of the first information includes:
obtaining user plane information sent by the UPF; where the user plane information includes at least one of throughput, session resource utilization, rate, delay, packet transmission and packet retransmission.

Optionally, in the information obtaining device, the sixth processing unit 3010 is further used to:
send a service quality monitoring request to PCF;
the obtaining the first information includes:
obtaining the service quality monitoring information sent by UPF, where the service quality monitoring information includes packet delay, the PCF sends the service quality monitoring request to the UPF through SMF, and the UPF sends a service quality monitoring request response to the first network function according to the service quality monitoring request; the service quality monitoring request response includes the packet delay.

Optionally, in the information obtaining device, when the first network function is AF, the UPF sends the service quality monitoring request response to the AF in one of the following ways:
sending the service quality monitoring request response to the AF;
sending the service quality monitoring request response to the AF through Network Exposure Function (NEF);
sending the service quality monitoring request response to the AF through SMF and PCF; or
when the first network function is NWDAF, the UPF sends the service quality monitoring request response to the NWDAF in one of the following ways:
sending the service quality monitoring request response to the NWDAF;
sending the service quality monitoring request response to the NWDAF through SMF and PCF.

Optionally, in the information obtaining device, the subscription request includes at least one of AOI of the requested UE, Single Network Slice Selection Assistance information (S-NSSAI), UE identifier, UE list and UE group.

Optionally, in the information obtaining device, the service quality monitoring request includes at least one of AOI of the requested UE, single network slice selection assistance information (S-NSSAI), UE identifier, UE list and UE group.

Optionally, in the information obtaining device, when the first network function is NWDAF, the sixth processing unit 3010 is further used to:
obtain a first request message sent by AF; according to the first request message, obtain the first information;
after selecting a federated learning member according to the first information, send the selected federated learning member to the AF.

One embodiment of the present disclosure further provides a node device, including: a transceiver, a processor, a memory, and a program or instruction stored on the memory and executable on the processor. The processor executes the program or instruction to perform the information obtaining method in any of the above items.

In this embodiment of the present disclosure, the node device may be any of the above network devices or UEs.

One embodiment of the present disclosure further provides a readable storage medium including a program or instructions stored thereon. The program or instructions, when executed by a processor, causes the processor to perform the steps of any one of the above information obtaining method, with the same technical effect achieved, which will not be repeated here to avoid repetition.

The processor is the processor in the network device or UE described in the above embodiment. The readable storage medium includes a computer readable storage media, such as computer read-only memory (ROM), random access memory (RAM), magnetic disk or optical disk, etc.

It should be further noted that the UEs described in this specification include but are not limited to smartphones, tablet computers, etc., and many functional components described here are referred as modules to more specifically emphasize independence of their implementation.

In embodiments of the present disclosure, modules may be implemented in software so as to be executed by various types of processors. For example, an identified module of executable code may include one or more physical or logical blocks of computer instructions, which may be structured, for example, as an object, procedure, or function. Nonetheless, the executable code of an identified module need not be physically located together, but may include different instructions stored on different locations; when these instructions are logically combined together, they form a module and achieve the specified purpose of the module.

In fact, an executable code module may be a single instruction or many instructions, and may even be distributed over multiple different code segments, distributed among different programs, and distributed across multiple memory devices. Similarly, operational data may be identified within modules and may be implemented in any suitable form and organized within any suitable type of data structure. The operational data may be collected as a single data set, or may be distributed over different locations (including on different storage devices), and may exist, at least in part, solely as electronic signals on a system or network.

When the module can be implemented by software, taking into account the level of existing hardware technology, those skilled in the art can build corresponding hardware circuits to implement the corresponding functions without considering the cost. The hardware circuits include conventional very large scale integration (VLSI) circuits or gate arrays as well as existing semiconductors such as logic chips, transistors, or other discrete components. Modules may also be implemented by using programmable hardware devices, such as field programmable gate arrays, programmable array logic, programmable logic devices, etc.

The above exemplary embodiments are described with reference to the accompanying drawings. Many different forms and embodiments are possible without departing from the spirit and teachings of the present disclosure. Therefore, the present disclosure should not be construed as limited to the exemplary embodiments presented herein. Rather, these exemplary embodiments are provided so that the present disclosure will be complete and perfect and will convey the scope of the present disclosure to those skilled in the art. In the drawings, component sizes and relative sizes may be exaggerated for clarity. The terms used herein are for the purpose of describing specific exemplary embodiments only and are not intended to be limiting. As used herein, the singular forms "a", "an" and "the" are intended to include the plural forms as well, unless the context clearly indicates otherwise. It will be further understood that the terms "comprising" and/or "including" used in this specification indicate the presence of features, integers, steps, operations, components and/or elements, but do not exclude the presence or addition of one or more other features, integers, steps, operations, components, elements and/or groups thereof. Unless otherwise indicated, when stated, a range of values includes upper and lower limits of the range and any sub-ranges therebetween.

It can be understood that the embodiments described in the the present disclosure can be implemented by hardware, software, firmware, middleware, microcode, or a combination thereof. For hardware implementation, modules, units, sub-modules, sub-units, etc. can be implemented in one or more application specific integrated circuits (ASIC), digital signal processing (DSP), DSP device (DSPD), programmable logic device (PLD), field-programmable gate Array (FPGA), general-purpose processor, controller, microcontroller, microprocessor, other electronic units or combinations thereof that perform functions described in the present disclosure.

The above are the preferred embodiments of the present disclosure. It should be noted that for those of ordinary skill in the art, several improvements and modifications can be made without departing from the principles described in the present disclosure. These improvements and modifications should be regarded to fall within the scope of protection of the present disclosure.

## Claims

1. An information obtaining method, performed by a first network function, comprising:
receiving a first request message sent by a user equipment (UE), wherein the first request message is used to request for obtaining an allowed analytics identifier;
obtaining a subscribed analytics identifier of the UE and/or an analytics identifier supported by a network side, according to the first request message;
determining the allowed analytics identifier of the UE according to the subscribed analytics identifier of the UE and/or the analytics identifier supported by the network side; and
sending the allowed analytics identifier to the UE.

2. The method according to claim 1, wherein the obtaining a subscribed analytics identifier of the UE according to the first request message, includes:
according to the first request message, sending a second request message to a second network function, and obtaining the subscribed analytics identifier of the UE sent by the second network function according to the second request message.

3. The method according to claim 1, wherein the obtaining an analytics identifier supported by a network side according to the first request message, includes:
according to the first request message, obtaining the analytics identifier supported by the network side by using local configuration; or, obtaining the analytics identifier supported by the network side by sending a query request to a third network function.

4. The method according to claim 1, wherein the first request message includes an analytics identifier and/or area of interest (AOI) requested by the UE.

5. The method according to claim 2, wherein the first network function is one of an access and mobility management function (AMF) and a session management function (SMF); and the second network function is one of an application layer function (AF) and a unified data management (UDM).

6. The method according to claim 3, wherein the first network function is one of an access and mobility management function (AMF) and a session management function (SMF); and the third network function is a network repository function (NRF).

7. An information obtaining method, performed by a user equipment (UE), comprising:
sending a first request message to a first network function, wherein the first request message is used to request for obtaining an allowed analytics identifier;
receiving the allowed analytics identifier sent by the first network function.

8. The method according to claim 7, wherein the first request message includes an analytics identifier and/or area of interest (AOI) requested by the UE.

9. The method according to claim 7, wherein the first network function is one of an access and mobility management function (AMF) and a session management function (SMF).

10. An information obtaining method, performed by a first network function, comprising:
receiving a first request message sent by a user equipment (UE), wherein the first request message is used to request for subscribing to an analytics result;
according to the first request message, sending a subscription request for subscribing to the analytics result, to a second network function.

11. The method according to claim 10, wherein the method further includes:
obtaining the analytics result sent by the second network function according to the subscription request;
sending the analytics result to the UE.

12. The method according to claim 10, wherein after receiving the first request message, the method further includes:
obtaining, according to local configuration, the second network function that supports providing the analytics result to the UE; or, obtaining the second network function by sending a query request to a third network function.

13. The method according to claim 12, wherein the first request message, the subscription request and the query request respectively include an analytics identifier and/or an area of interest (AOI) of the requested analytics result.

14. The method according to claim 13, wherein the subscription request further includes address information of the UE.

15. The method according to claim 12, wherein the first network function is one of an access and mobility management function (AMF), a session management function (SMF) and a user plane function (UPF); the second network function is one of a network data analytics function (NWDAF) and an application layer function (AF); and the third network function is a network repository function (NRF).

16. An information obtaining method, performed by a second network function, comprising:
receiving a subscription request sent by a first network function, wherein the subscription request is used to request for subscribing to an analytics result;
according to the subscription request, sending the subscribed analytics result to a fourth network function.

17. The method according to claim 16, wherein the subscription request includes an analytics identifier and/or area of interest (AOI) of the requested analytics result.

18. The method according to claim 16, wherein the first network function is one of an access and mobility management function (AMF), a session management function (SMF) and a user plane function (UPF); the second network function is one of a network data analytics function (NWDAF) and an application layer function (AF); and the fourth network function is one of an access and mobility management function (AMF), a session management function (SMF) and a user plane function (UPF).

19. An information obtaining method, performed by a user equipment (UE), comprising:
sending a first request message to a first network function, wherein the first request message is used to request for subscribing to an analytics result;
receiving the subscribed analytics result sent by the fourth network function.

20. The method according to claim 19, wherein the first request message includes an analytics identifier and/or area of interest (AOI) of the requested analytics result.

21. The method according to claim 19, wherein the first network function is one of an access and mobility management function (AMF), a session management function (SMF) and a user plane function (UPF); and the fourth network function is one of an access and mobility management function (AMF), a session management function (SMF) and a user plane function (UPF).

22. An information obtaining method, performed by a first network function which is an application layer function (AF), comprising:
sending a subscription request to a second network function, wherein the subscription request is used to request for subscribing to an analytics result.

23. The method according to claim 22, wherein the method further includes:
obtaining a first request message sent by a user equipment (UE) through an application layer; wherein the first request message is used to request for subscribing to the analytics result; or, negotiating with the UE to request for subscribing to the analytics result;
sending the subscription request to the second network function according to the first request message and negotiation.

24. The method according to claim 22, wherein the method further includes:
obtaining the analytics result sent by the second network function according to the subscription request;
sending the analytics result to the UE.

25. The method according to claim 22, wherein the method further includes:
obtaining the second network function according to local configuration; or obtaining the second network function by sending a query request to a third network function.

26. The method according to claim 25, wherein the second network function is a network data analytics function (NWDAF); and the third network function is a network repository function (NRF).

27. The method according to claim 23, wherein the first request message includes an analytics identifier and/or area of interest (AOI) of the requested analytics result.

28. The method according to claim 22, wherein the subscription request includes at least one of a UE identifier, an analytics identifier and AOI of the requested analytics result.

29. An information obtaining method, performed by a second network function, comprising:
receiving a subscription request sent by a first network function; wherein the subscription request is used to request for subscribing to an analytics result, and the first network function is an application layer function (AF);
according to the subscription request, sending the subscribed analytics result to a fourth network function.

30. The method according to claim 29, wherein the subscription request includes at least one of a UE identifier, an analytics identifier and AOI of the requested analytics result.

31. The method according to claim 29, wherein the second network function is a network data analytics function (NWDAF); and the fourth network function is one of an access and mobility management function (AMF), a session management function (SMF) and an application layer function (AF).

32. An information obtaining method, performed by a user equipment (UE), comprising:
receiving an analytics result sent by a fourth network function.

33. The method according to claim 32, wherein the fourth network function is one of an access and mobility management function (AMF), a session management function (SMF) and an application layer function (AF).

34. The method according to claim 32, wherein before receiving the analytics result sent by the fourth network function, the method further includes:
sending a first request message to a first network function; wherein the first request message is used to request for subscribing to the analytics result; or, negotiating with the first network function to request for subscribing to the analytics result;
wherein the first network function is an application layer function (AF).

35. The method according to claim 34, wherein the first request message includes an analytics identifier and/or area of interest (AOI) of the requested analytics result.

36. An information obtaining method, performed by a fourth network function, comprising:
receiving an analytics result sent by a second network function;
sending the analytics result to a user equipment (UE).

37. The method according to claim 36, wherein the second network function is a network data analytics function (NWDAF); and the fourth network function is one of an access and mobility management function (AMF), a session management function (SMF) and an application layer function (AF).

38. The method according to claim 36, wherein the second network function is one of a network data analytics function (NWDAF) and an application layer function (AF); and the fourth network function is one of an access and mobility management function (AMF), a session management function (SMF) and a user plane function (UPF).

39. An information obtaining method, performed by a first network function which is an application layer function (AF), comprising:
sending a subscription request for 5GC network information or 5GC information to a second network function; wherein the second network function is a 5GC network function (NF).

40. The method according to claim 39, wherein the method further includes:
obtaining the 5GC network information or 5GC information sent by the second network function according to the subscription request;
sending the 5GC network information or the 5GC information to the UE.

41. The method according to claim 39, wherein the method further includes:
obtaining a first request message sent by the UE; wherein the first request message is used to request for subscribing to 5GC network information or 5GC information, and the first request message includes at least one of a UE identifier, an area of interest (AOI), a 5GC network information identifier and a 5GC information identifier;
sending the subscription request to the second network function according to the first request message.

42. The method according to claim 39, wherein the method further includes:
obtaining the second network function according to local configuration; or, obtaining the second network function by sending a query request to a third network function; wherein the third network function is a network repository function (NRF).

43. The method according to claim 39, wherein the subscription request includes at least one of a UE identifier, an area of interest (AOI), a 5GC network information identifier and a 5GC information identifier.

44. An information obtaining method, performed by a second network function which is a 5GC network function (NF), comprising:
receiving a subscription request sent by a first network function, wherein the subscription request is used to subscribe to 5GC network information or 5GC information;
sending the subscribed 5GC network information or 5GC information to a fourth network function according to the subscription request.

45. The method according to claim 44, wherein the subscription request includes at least one of a UE identifier, an area of interest (AOI), a 5GC network information identifier and a 5GC information identifier.

46. The method according to claim 44, wherein the fourth network function is one of an access and mobility management function (AMF), a session management function (SMF), a user plane function (UPF), and an application layer function (AF).

47. An information obtaining method, performed by a user equipment (UE), comprising:
sending a first request message to a first network function; wherein the first request message is used to request for subscribing to 5GC network information or 5GC information, and the first network function is an application layer function (AF);
obtaining the 5GC network information or 5GC information subscribed by the UE, sent by the fourth network function.

48. The method according to claim 47, wherein the first request message includes at least one of a UE identifier, an area of interest (AOI), a 5GC network information identifier and a 5GC information identifier.

49. The method according to claim 47, wherein the fourth network function is one of an access and mobility management function (AMF), a session management function (SMF), a user plane function (UPF), and an application layer function (AF).

50. An information obtaining method, performed by a fourth network function, comprising:
receiving 5GC network information or 5GC information sent by a second network function; wherein the second network function is 5GC network function (NF);
sending the 5GC network information or 5GC information to a user equipment (UE).

51. The method according to claim 50, wherein the fourth network function is one of an access and mobility management function (AMF), a session management function (SMF), a user plane function (UPF), and an application layer function (AF).

52. An information obtaining method, performed by a first network function which is an application layer function (AF) or a network data analytics function (NWDAF), comprising:
obtaining first information; wherein the first information includes at least one of UE location, UE status, subscription information, user plane information, wireless status and service quality monitoring information;
selecting a federated learning member according to the first information.

53. The method according to claim 52, wherein the method includes:
sending a subscription request to an access and mobility management function (AMF);
wherein the obtaining first information includes:
obtaining at least one of UE location, UE status and subscription information sent by the AMF according to the subscription request.

54. The method according to claim 52, wherein when the first network function is AF, the method further includes:
sending a subscription request to the NWDAF;
wherein the obtaining first information includes:
obtaining wireless status sent by the NWDAF according to the subscription request; wherein the NWDAF obtains the wireless status by collecting data through an operation administration and maintenance (OAM), and the wireless status includes at least one of reference signal receiving power (RSRP), reference signal receiving quality (RSRQ), signal to interference plus noise ratio (SINR) and radio resource utilization ratio.

55. The method according to claim 52, wherein when the first network function is NWDAF, the method further includes:
obtaining wireless status by collecting data through an operation administration and maintenance (OAM); wherein the wireless status includes at least one of reference signal receiving power (RSRP), reference signal receiving quality (RSRQ), signal to interference plus noise ratio (SINR) and radio resource utilization ratio.

56. The method according to claim 52, wherein the method includes:
sending a subscription request to a user plane function (UPF);
wherein the obtaining first information includes:
obtaining the user plane information sent by the UPF; wherein the user plane information includes at least one of throughput, session resource utilization, rate, delay, packet transmission and packet retransmission.

57. The method according to claim 52, wherein the method includes:
sending a service quality monitoring request to a policy control function (PCF);
wherein the obtaining first information includes:
obtaining service quality monitoring information sent by the UPF; wherein the service quality monitoring information includes packet delay, the PCF sends the service quality monitoring request to the UPF through a session management function (SMF), and the UPF sends a service quality monitoring request response to the first network function according to the service quality monitoring request; the service quality monitoring request response includes packet delay.

58. The method according to claim 57, wherein when the first network function is AF, the UPF sends the service quality monitoring request response to AF in one of the following ways:
sending the service quality monitoring request response to the AF;
sending the service quality monitoring request response to the AF through network exposure function (NEF);
sending the service quality monitoring request response to the AF through SMF and PCF;
or,
when the first network function is NWDAF, the UPF sends the service quality monitoring request response to NWDAF in one of the following ways:
sending the service quality monitoring request response to the NWDAF;
sending the service quality monitoring request response to the NWDAF through SMF and PCF.

59. The method according to claim 53, 54 or 56, wherein the subscription request includes at least one of AOI of the requested UE, single network slice selection assistance information (S-NSSAI), UE identifier, UE list and UE group.

60. The method according to claim 57, wherein the service quality monitoring request includes at least one of AOI of the requested UE, single network slice selection assistance information (S-NSSAI), UE identifier, UE list and UE group.

61. The method according to claim 52, wherein when the first network function is NWDAF, the method further includes:
obtaining a first request message sent by the AF; obtaining the first information according to the first request message;
after selecting a federated learning member according to the first information, sending the selected federated learning member to the AF.

62. A network device which is a first network function, comprising: a transceiver and a processor;
wherein the transceiver is configured to receive a first request message sent by a user equipment (UE), wherein the first request message is used to request for obtaining an allowed analytics identifier;
the processor is configured to obtain a subscribed analytics identifier of the UE and/or an analytics identifier supported by a network side according to the first request message;
the processor is further configured to determine the allowed analytics identifier of the UE according to the subscribed analytics identifier of the UE and/or the analytics identifier supported by the network side; and
the transceiver is further configured to send the allowed analytics identifier to the UE.

63. A user equipment (UE), comprising: a transceiver; wherein the transceiver is configured to,
send a first request message to a first network function, wherein the first request message is used to request for obtaining an allowed analytics identifier;
receive the allowed analytics identifier sent by the first network function.

64. A network device which is a first network function, comprising: a transceiver; wherein the transceiver is configured to,
receive a first request message sent by a user equipment (UE), wherein the first request message is used to request for subscribing to an analytics result;
according to the first request message, send a subscription request for subscribing to the analytics result, to a second network function.

65. A network device which is a second network function, comprising: a transceiver; wherein the transceiver is configured to,
receive a subscription request sent by a first network function, wherein the subscription request is used to request for subscribing to an analytics result;
according to the subscription request, send the subscribed analytics result to a fourth network function.

66. A user equipment (UE), comprising: a transceiver; wherein the transceiver is configured to,
send a first request message to a first network function, wherein the first request message is used to request for subscribing to an analytics result;
receive the subscribed analytics result sent by the fourth network function.

67. A network device which is a first network function that is an application layer function (AF), comprising: a transceiver; wherein the transceiver is configured to,
send a subscription request to a second network function, wherein the subscription request is used to request for subscribing to an analytics result.

68. A network device which is a second network function, comprising: a transceiver; wherein the transceiver is configured to,
receiving a subscription request sent by a first network function; wherein the subscription request is used to request for subscribing to an analytics result, and the first network function is an application layer function (AF);
according to the subscription request, sending the subscribed analytics result to a fourth network function.

69. A user equipment (UE), comprising: a transceiver; wherein the transceiver is configured to,
receive an analytics result sent by a fourth network function.

70. A network device which is a fourth network function, comprising: a transceiver; wherein the transceiver is configured to,
receive an analytics result sent by a second network function;
send the analytics result to a user equipment (UE).

71. A network device which is a first network function that is an application layer function (AF), comprising: a transceiver; wherein the transceiver is configured to,
send a subscription request for 5GC network information or 5GC information to a second network function; wherein the second network function is a 5GC network function (NF).

72. A network device which is a second network function that is a 5GC network function (NF), comprising: a transceiver; wherein the transceiver is configured to,
receive a subscription request sent by a first network function, wherein the subscription request is used to subscribe to 5GC network information or 5GC information;
send the subscribed 5GC network information or 5GC information to a fourth network function according to the subscription request.

73. A user equipment (UE), comprising: a transceiver; wherein the transceiver is configured to,
send a first request message to a first network function; wherein the first request message is used to request for subscribing to 5GC network information or 5GC information, and the first network function is an application layer function (AF);
obtain the 5GC network information or 5GC information subscribed by the UE, sent by the fourth network function.

74. A network device which is a fourth network function, comprising: a transceiver; wherein the transceiver is configured to,
receive 5GC network information or 5GC information sent by a second network function; wherein the second network function is 5GC network function (NF);
send the 5GC network information or 5GC information to a user equipment (UE).

75. A network device which is a first network function that is an application layer function (AF) or a network data analytics function (NWDAF), comprising: a transceiver; wherein the transceiver is configured to,
obtain first information; wherein the first information includes at least one of UE location, UE status, subscription information, user plane information, wireless status and service quality monitoring information;
select a federated learning member according to the first information.

76. A node device, comprising: a transceiver, a processor, a memory, and a program or instruction stored on the memory and executable on the processor; wherein the processor executes the program or instruction to perform the information obtaining method according to any one of claims 1 to 61.

77. A readable storage medium, comprising a program or instructions stored thereon; wherein the program or instructions, when executed by a processor, causes the processor to perform the information obtaining method according to any one of claims 1 to 61.
